(19) Europäisches Patentamt / European Patent Office / Office européen des brevets

(11) EP 2 994 795 B1

(12) # EUROPÄISCHE PATENTSCHRIFT

(45) Veröffentlichungstag und Bekanntmachung des Hinweises auf die Patenterteilung:
**13.02.2019 Patentblatt 2019/07**

(21) Anmeldenummer: **14716759.7**

(22) Anmeldetag: **09.04.2014**

(51) Int Cl.:
***G02F 1/1347*** (2006.01) ***G02F 1/1337*** (2006.01)
***G02F 1/133*** (2006.01) ***C09K 19/60*** (2006.01)

(86) Internationale Anmeldenummer:
**PCT/EP2014/000943**

(87) Internationale Veröffentlichungsnummer:
**WO 2014/180525 (13.11.2014 Gazette 2014/46)**

(54) **VORRICHTUNG MIT ZWEI FLÜSSIGKRISTALLINEN SCHALTSCHICHTEN ZUR REGULIERUNG DES OPTISCHEN ENERGIE-DURCHTRITTS**

DEVICE HAVING TWO LIQUID CRYSTAL SWITCHING LAYERS FOR REGULATING THE PASSAGE OF OPTICAL ENERGY

DISPOSITIF AYANT DEUX COUCHES DE COMMUTATION AUX CRISTAUX LIQUIDES POUR RÉGULER LE PASSAGE D'ÉNERGIE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2013 EP 13002445**

(43) Veröffentlichungstag der Anmeldung:
**16.03.2016 Patentblatt 2016/11**

(73) Patentinhaber: **Merck Patent GmbH**
**64293 Darmstadt (DE)**

(72) Erfinder:
- **JUNGE, Michael**
  **64319 Pfungstadt (DE)**
- **BEYER, Andreas**
  **63452 Hanau (DE)**
- **PATWAL, Ursula**
  **64354 Reinheim (DE)**

(56) Entgegenhaltungen:
**EP-A1- 0 022 311 WO-A1-2012/047843**
**US-A- 5 943 104**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Anmeldung betrifft eine Vorrichtung zur Regulierung des Energie-Durchtritts, welche mindestens zwei hintereinander angeordnete Schaltschichten S(1) und S(2) enthält, wobei die Schaltschichten ein flüssigkristallines Medium enthaltend mindestens eine dichroitische Verbindung enthalten, und wobei sich die Ausrichtung der Moleküle des flüssigkristallinen Mediums in mindestens einem Schaltzustand der Vorrichtung in den Schichten S(1) und S(2) unterscheidet.

Unter dem Begriff Energie wird im Rahmen der vorliegenden Erfindung insbesondere Energie durch elektromagnetische Strahlung im UV-A-, VIS-, sowie NIR-Bereich verstanden. Nochmals insbesondere wird darunter Energie durch Strahlung verstanden, welche von den üblicherweise in Fenstern verwendeten Materialien (z. B. Glas) nicht oder nur in einem vernachlässigbaren Umfang absorbiert wird. Gemäß den üblicherweise verwendeten Definitionen wird unter dem UV-A-Bereich eine Wellenlänge von 320 bis 380 nm verstanden, unter dem VIS-Bereich eine Wellenlänge von 380 nm bis 780 nm verstanden und unter dem NIR-Bereich eine Wellenlänge von 780 nm bis 2000 nm verstanden. Entsprechend wird unter dem Begriff Licht allgemein elektromagnetische Strahlung mit Wellenlängen zwischen 320 und 2000 nm verstanden.

Unter dem Begriff flüssigkristallines Medium wird im Rahmen der vorliegenden Anmeldung ein Material verstanden, das unter bestimmten Bedingungen flüssigkristalline Eigenschaften aufweist. Bevorzugt hat das Material bei Raumtemperatur und in einer gewissen Temperaturspanne darüber und darunter flüssigkristalline Eigenschaften. Das flüssigkristalline Medium kann eine einzige Verbindung enthalten, oder es kann mehrere unterschiedliche Verbindungen enthalten. Typischerweise enthält das flüssigkristalline Medium gemäß der Erfindung mindestens eine Verbindung, deren Moleküle eine langgestreckte Form aufweisen, d.h. in einer Raumrichtung deutlich länger sind als in den anderen beiden Raumrichtungen. Diese Raumrichtung wird auch als Längsachse des Moleküls bezeichnet.

Unter einem dichroitischen Farbstoff wird im Rahmen der vorliegenden Anmeldung eine lichtabsorbierende Verbindung verstanden, bei der die Absorptionseigenschaften von der Orientierung der Verbindung relativ zur Polarisationsrichtung des Lichts abhängig sind. Typischerweise weist eine dichroitische Verbindung gemäß der vorliegenden Anmeldung eine langgestreckte Form auf, d.h. die Verbindung ist in einer Raumrichtung deutlich länger als in den anderen beiden Raumrichtungen. Diese Raumrichtung wird auch als Längsachse der Verbindung bezeichnet.

Auf dem Gebiet der Schaltvorrichtungen zur Regulierung des Energie-Durchtritts durch Flächen, beispielsweise Glasflächen, sind in den vergangenen Jahren mehrere unterschiedliche technische Lösungen vorgeschlagen worden.

Eine vorteilhafte Lösung ist die Verwendung von Schaltschichten enthaltend ein flüssigkristallines Medium in Mischung mit einem oder mehreren dichroitischen Farbstoffen. Durch Anlegen einer Spannung kann bei diesen Schaltschichten eine Veränderung der räumlichen Orientierung der Moleküle der dichroitischen Verbindung erzielt werden, welche eine Änderung der Transmission durch die Schaltschicht bewirkt. Eine entsprechende Vorrichtung ist beispielsweise in WO 2009/141295 beschrieben.

Alternativ kann eine solche Transmissionsänderung auch ohne elektrische Spannung durch einen Temperaturinduzierten Übergang von einem isotropen Zustand des flüssigkristallinen Mediums zu einem flüssigkristallinen Zustand erzielt werden, wie beispielsweise in US 2010/0259698 beschrieben.

Die genannten Publikationen beschreiben die Verwendung einer einzigen Schaltschicht, die wie oben beschrieben aufgebaut ist, und die in einen Zustand mit einer relativ gesehen hohen Transmission und in einen Zustand mit einer relativ gesehen niedrigen Transmission geschaltet werden kann (Hellzustand und Dunkelzustand der Vorrichtung). Vorrichtungen basierend auf diesem Prinzip sind dadurch gekennzeichnet, dass sie nur einen geringen Unterschied im Energie-Durchtritt zwischen dem Hellzustand und dem Dunkelzustand aufweisen. Dieser Unterschied wird auch als Transmissionshub bezeichnet.

Es ist in diesem Zusammenhang von hohem Interesse, Vorrichtungen zur Regulierung des Energie-Durchtritts bereitzustellen, welche eine möglichst große Energie-Regulationsfähigkeit aufweisen, d.h. durch ihr Schalten einen möglichst großen Unterschied im Energie-Durchtritt durch die Vorrichtung bewirken. Dadurch können sie beispielsweise den Energie-Eintrag in einen Innenraum und damit die Temperatur dieses Innenraums effektiv regulieren. Eine wünschenswerte Vorrichtung bewirkt daher nicht nur die Regulation des Energie-Durchtritts in Form von sichtbarem Licht, sondern auch die Regulation des Durchtritts von Energie in Form von nicht sichtbarer Wärmestrahlung, insbesondere von NIR-Strahlung einer Wellenlänge von 780 nm bis 2000 nm.

Weiterhin ist es von Interesse, dass zusätzlich ein sehr Energiedurchlässiger Hellzustand der Vorrichtung vorliegt. Im Fall einer geringen Energie-Einstrahlung von außen kann nur dadurch ein komfortabler Zustand in Innenräumen erreicht werden kann, deren Energie-Eintrag durch die Vorrichtung reguliert wird.

Im Stand der Technik wird beschrieben (US 2010/0259698), Polarisatoren einzusetzen, um den Transmissionshub von Schaltvorrichtungen zur Regulierung des Energie-Durchtritts zu vergrößern. Dadurch wird jedoch die Helltransmission der Vorrichtungen deutlich verringert, was wie oben erwähnt unerwünscht ist.

Aus WO2012/047843 sind optische Vorrichtungen in Brillen bekannt, die guest-host Flüssigkristallmischungen mit dichroitischen Farbstoffen enthalten; die Mischungen weisen einen Anisotropiegrad von mindestens 0.78 und einen

Klärpunkt von mindestens 45°C bis über 90°C auf.

Eine Vorrichtung gemäß dem Oberbegriff des Anspruchs 1 ist darüber hinaus aus US4943104 bekannt.

Im Rahmen der vorliegenden Erfindung wurden nun gefunden, dass die oben genannten technischen Aufgaben durch Bereitstellung einer neuartig aufgebauten Vorrichtung zur Regulierung des Energie-Durchtritts gelöst werden können.

Gegenstand der Erfindung ist daher eine Vorrichtung zur Regulierung des Energie-Durchtritts durch eine Fläche, wie in Anspruch 1 definiert.

Ein solcher Aufbau wurde, obwohl im Stand der Technik heute eine Vielzahl an unterschiedlichen technischen Lösungen für Vorrichtungen zur Regulierung des Energie-Durchtritts bekannt sind, auf dem betreffenden Gebiet bislang noch nicht vorgeschlagen.

Dies kann darin begründet sein, dass hierzu ein technisches Vorurteil zu überwinden war, das gegen einen solchen Aufbau spricht. Dieses Vorurteil besagt, dass Vorrichtungen, die Verwendung in Gebäudestrukturen finden, wie die erfindungsgemäßen Vorrichtungen, möglichst einfach aufgebaut sein müssen. Eine hohe Komplexität sei generell zu vermeiden, selbst wenn in der Praxis eine gleich hohe Lebensdauer wie das weniger komplexe Bauteil gezeigt worden sei.

Diese Meinung des Fachmann auf dem Gebiet des Bauingenieurwesens ist derart weit verbreitet, dass sie Eingang in eine technische Norm gefunden hat: DIN ISO 15686. Zu einer Diskussion des Subfaktors Komplexität innerhalb des Faktors Komponentenqualität und Bauteilqualität und seiner angenommenen Auswirkung auf die Bauteil-Lebensdauer vgl. auch F. Ritter, Lebensdauer von Bauteilen und Bauelementen-Modellierung und praxisnahe Prognose, Dissertation, Darmstadt 2011.

Rückblickend gesehen wiegen jedoch die Vorteile der erfindungsgemäßen Vorrichtung (die hohe Helltransmission verbunden mit hohem Transmissionshub) die Nachteile eines komplizierteren Aufbaus deutlich auf. Auch wurden bislang keine Nachteile bezüglich der Lebensdauer beobachtet.

Im Rahmen dieser Anmeldung wird der bei nematischen flüssigkristallinen Medien übliche Begriff der Orientierungsachse für die Bezeichnung der gemittelten Ausrichtung der Längsachsen der Moleküle des flüssigkristallinen Mediums im Raum verwendet. Dabei gilt, dass die individuelle Ausrichtung der Längsachsen der einzelnen Moleküle des flüssigkristallinen Mediums nicht in jedem Einzelfall mit der Orientierungsachse übereinstimmen muss.

Erfindungsgemäß müssen die Schichten O(2) und O(3) der Vorrichtung nicht direkt aufeinander abfolgen. In einer bevorzugten Ausführungsform der Erfindung liegen eine oder mehrere Schichten zwischen ihnen vor, beispielsweise eine oder mehrere Glassschichten.

Bevorzugt ist die Vorrichtung angeordnet in einer Öffnung einer größeren flächigen Struktur, wobei die flächige Struktur selbst nicht oder nur geringfügig Energie-Durchtritt zulässt, und wobei die Öffnung relativ gesehen energiedurchlässiger ist. Bevorzugt ist die flächige Struktur eine Wand oder eine sonstige Begrenzung eines Innenraums nach außen. Weiterhin bevorzugt bedeckt die flächige Struktur eine mindestens genauso große Fläche, besonders bevorzugt eine mindestens doppelt so große Fläche wie die Öffnung in ihr, in der die erfindungsgemäße Vorrichtung angeordnet ist.

Bevorzugt ist die Vorrichtung dadurch gekennzeichnet, dass sie eine Flächenausdehnung von mindestens 0.05 $m^2$ aufweist, bevorzugt mindestens 0.1 $m^2$, besonders bevorzugt mindestens 0.5 $m^2$ und ganz besonders bevorzugt mindestens 0.8 $m^2$.

Die Vorrichtung ist erfindungsgemäß in einer Öffnung eines Gebäudes, eines Containers, eines Fahrzeugs oder eines sonstigen weitgehend geschlossenen Raums angebracht. Besonders bevorzugt ist sie in einer wie oben beschriebenen, relativ gesehen energiedurchlässigeren Öffnung eines Gebäudes, eines Containers, eines Fahrzeugs oder eines sonstigen weitgehend geschlossenen Raums angebracht. Die Vorrichtung kann jedoch für beliebige Innenräume verwendet werden, besonders wenn diese nur begrenzten Luftaustausch mit der Umgebung aufweisen und lichtdurchlässige Begrenzungsflächen aufweisen, durch die Energie-Eintrag von außen in Form von Lichtenergie stattfinden kann. Besonders relevant ist die Verwendung der Vorrichtung für Innenräume, welche starker Sonneneinstrahlung durch lichtdurchlässige Flächen, beispielsweise durch Fensterflächen, ausgesetzt sind.

Weiterer Gegenstand der Erfindung ist daher die Verwendung der erfindungsgemäßen Vorrichtung, wie oben beschrieben, zur Regulierung des Energie-Durchtritts durch eine weitgehend energiedurchlässige Fläche in einen Innenraum, bevorzugt des Durchtritts von Energie in Form von Sonnenlicht.

Die erfindungsgemäße Vorrichtung kann jedoch auch zur ästhetischen Raumgestaltung eingesetzt werden, beispielsweise für Licht- und Farbeffekte. Auch kann ihr Signalwirkung zukommen. Beispielsweise können Tür- und Wandelemente enthaltend die erfindungsgemäße Vorrichtung in grau oder in Farbe nach transparent geschaltet werden. Desweiteren kann die Vorrichtung auch eine weiße oder farbige flächige Hinterleuchtung, die in der Helligkeit moduliert wird, oder eine farbige flächige Hinterleuchtung, z. B. gelb, die mit einer andersfarbigen Gast-Wirtsanzeige, z. B. blau, moduliert wird, umfassen. Weitere ästhetische Effekte können auch mit Hilfe von seitlich einstrahlenden Lichtquellen wie weißen oder farbigen LEDs oder LED-Ketten in Kombination mit der erfindungsgemäßen Vorrichtung erzeugt werden. Hierbei können eine oder beide Glasseiten der erfindungsgemäßen Vorrichtung entweder flächig oder mit Flächenelementen aus angerautem oder strukturiertem Glas versehen sein zur Lichtauskopplung und/oder zur Lichteffekterzeugung.

Eine nochmals alternative Verwendung, die nicht Gegenstand der Erfindung ist, ist die Verwendung zur Regulierung des Lichteinfalls auf die Augen, beispielsweise in Schutzbrillen, Visieren oder Sonnenbrillen, wobei die Vorrichtung in einem Schaltzustand den Lichteinfall auf die Augen gering hält, und in einem anderen Schaltzustand den Lichteinfall weniger stark verringert.

Die Vorrichtung stellt eine schaltbare Vorrichtung dar. Unter Schaltung der Vorrichtung wird dabei eine Änderung des Energie-Durchtritts durch die Vorrichtung verstanden. Dies kann erfindungsgemäß zur Regulierung des Energie-Eintrags durch die Vorrichtung hindurch in einen dahinter liegenden Raum genutzt werden.

Die erfindungsgemäße Vorrichtung ist bevorzugt elektrisch schaltbar. Sie kann aber auch rein thermisch schaltbar sein, wie es beispielsweise in WO 2010/118422 für Vorrichtungen zur Regulierung des Energie-Durchtritts beschrieben wird.

In letzterem Fall erfolgt das Schalten bevorzugt durch einen Übergang von einem nematischen zu einem isotropen Zustand des flüssigkristallinen Mediums durch Änderung der Temperatur der schaltbaren Schicht enthaltend das flüssigkristalline Medium.

Im nematischen Zustand liegen die Moleküle des flüssigkristallinen Mediums, und damit auch die dichroitischen Verbindungen, geordnet vor, beispielsweise parallel ausgerichtet zur Oberfläche der Vorrichtung durch die Wirkung einer Orientierungsschicht. Im isotropen Zustand liegen die Moleküle ungeordnet vor. Die Ordnung der Moleküle des flüssigkristallinen Mediums bewirkt eine Ordnung der dichroitischen Farbstoffe. Der Unterschied zwischen geordnetem und ungeordnetem Vorliegen der dichroitischen Farbstoffe bewirkt seinerseits einen Unterschied im Energie-Durchtritt durch die erfindungsgemäße Vorrichtung, gemäß dem Prinzip, dass dichroitische Farbstoff-Moleküle je nach Orientierung in Bezug auf die Schwingungsebene des Lichts einen höheren oder einen niedrigeren Absorptionskoeffizienten aufweisen.

Ist die Vorrichtung elektrisch schaltbar, weist sie Mittel zur Ausrichtung der Moleküle des flüssigkristallinen Mediums der Schaltschicht durch elektrische Spannung auf. Bevorzugt weist sie in diesem Fall vier Elektroden auf, von denen jeweils eine an jeder der beiden Seiten der Schaltschicht S(1) und jeweils eine an jeder der beiden Seiten der Schaltschicht S(2) angebracht ist. Die Elektroden bestehen bevorzugt aus ITO oder aus einer dünnen, bevorzugt transparenten Metall- und/oder Metalloxidschicht, beispielsweise aus Silber oder FTO (Fluor-dotiertes Zinnoxid) oder einem alternativen, dem Fachmann für diese Verwendung bekannten Material. Die Elektroden sind bevorzugt mit elektrischen Anschlüssen versehen. Die Stromversorgung wird bevorzugt durch eine Batterie, einen Akkumulator, eine Superkapazität oder durch externe Stromversorgung bereitgestellt.

Der Schaltvorgang erfolgt im Fall von elektrischer Schaltung durch eine gemeinsame räumliche Ausrichtung der Moleküle des flüssigkristallinen Mediums einer Schicht durch das Anlegen von Spannung. Die Moleküle der dichroitischen Verbindung werden dadurch, wie oben erläutert, ebenfalls ausgerichtet, so dass ein Unterschied im Energie-Durchtritt durch die Vorrichtung bewirkt wird.

Es ist erfindungsgemäß bevorzugt, dass die Schaltschichten getrennt elektrisch schaltbar sind, in der Weise, dass alternativ nur S(1), oder nur S(2), oder beide, oder keine von beiden, einem elektrischen Feld ausgesetzt sein können.

Durch Anlegen eines elektrischen Feldes erfolgt bevorzugt eine vertikale Ausrichtung der Moleküle des flüssigkristallinen Mediums, wobei vertikal bezogen auf die Ebene der Schaltschichten zu verstehen ist. Es ist aber ebenfalls möglich und in bestimmten Fällen auch bevorzugt, dass die Ausrichtung parallel zur Ebene der Schaltschichten erfolgt. Wie das Feld gestaltet sein muss, bzw. wie die Moleküle des flüssigkristallinen Mediums gestaltet sein müssen, damit die gewünschte Ausrichtung der Moleküle durch das elektrische Feld erfolgt, ist dem Fachmann auf dem Gebiet der flüssigkristallinen Medien bekannt.

In einer bevorzugten Ausführungsform wird dabei die Schaltschicht von einem Zustand mit hoher Absorption, d. h. geringem Energie-Durchtritt, der ohne Spannung vorliegt, in einen Zustand mit geringerer Absorption, d. h. höherem Energie-Durchtritt, überführt. Bevorzugt ist das flüssigkristalline Medium in beiden Zuständen nematisch. Der spannungslose Schaltzustand ist bevorzugt dadurch gekennzeichnet, dass die Moleküle des flüssigkristallinen Mediums, und damit die Moleküle der dichroitischen Verbindung, parallel zur Oberfläche der Schaltschicht ausgerichtet vorliegen (planare Orientierung). Dies wird bevorzugt durch eine entsprechend gewählte Orientierungsschicht erreicht. Der Schaltzustand unter Spannung ist bevorzugt dadurch gekennzeichnet, dass die Moleküle des flüssigkristallinen Mediums, und damit die Moleküle der dichroitischen Verbindung, senkrecht zur Oberfläche der Schaltschicht vorliegen (homeotrope Orientierung).

In einer alternativen, ebenfalls bevorzugten Ausführungsform wird die Schaltschicht von einem Schaltzustand mit geringer Absorption, d. h. hohem Energie-Durchtritt, der ohne Spannung vorliegt, in einen Schaltzustand mit höherer Absorption, d. h. geringerem Energie-Durchtritt, überführt. Bevorzugt ist das flüssigkristalline Medium in beiden Zuständen nematisch. Der spannungslose Schaltzustand ist bevorzugt dadurch gekennzeichnet, dass die Moleküle des flüssigkristallinen Mediums, und damit die Moleküle der dichroitischen Verbindung, senkrecht zur Oberfläche der Schaltschicht ausgerichtet vorliegen (homeotrope Orientierung). Dies wird bevorzugt durch eine entsprechend gewählte Orientierungsschicht erreicht. Der Schaltzustand unter Spannung ist bevorzugt dadurch gekennzeichnet, dass die Moleküle des flüssigkristallinen Mediums, und damit die Moleküle der dichroitischen Verbindung, parallel zur Oberfläche der Schaltschicht vorliegen (planare Orientierung).

In einer bevorzugten Ausführungsform der Vorrichtung sind die Schaltschichten S(1) und S(2) bezüglich ihrer Ausrichtung im spannungslosen Schaltzustand gleich. Dabei sind die folgenden zwei Fälle denkbar: die Vorrichtung kann in einem Fall eine planare Ausrichtung in beiden Schaltschichten im spannungslosen Schaltzustand aufweisen, oder die Vorrichtung kann in einem anderen Fall eine homeotrope Ausrichtung in beiden Schaltschichten im spannungslosen Schaltzustand aufweisen.

Gemäß einer alternativen, ebenfalls in bestimmten Fällen bevorzugten Ausführungsform, sind die Schaltschichten S(1) und S(2) bezüglich ihrer Ausrichtung im spannungslosen Schaltzustand unterschiedlich, beispielsweise dahingehend, dass die Moleküle des flüssigkristallinen Mediums in einer der Schaltschichten im spannungslosen Schaltzustand homeotrop ausgerichtet ist, und in der anderen der beiden Schaltschichten im spannungslosen Schaltzustand planar ausgerichtet sind.

Weiterhin ist auch der Fall möglich und in bestimmten Fällen bevorzugt, dass die Schaltschichten bezüglich ihrer Ausrichtung im Schaltzustand unter Spannung unterschiedlich sind, beispielsweise dahingehend, dass die Moleküle des flüssigkristallinen Mediums in einer der Schaltschichten im Schaltzustand unter Spannung homeotrop ausgerichtet ist, und in der anderen der beiden Schaltschichten im Schaltzustand unter Spannung planar ausgerichtet sind. Bevorzugt ist dieser Fall mit dem oben genannten Fall kombiniert, dass die Schaltschichten S(1) und S(2) bezüglich ihrer Ausrichtung im spannungslosen Schaltzustand unterschiedlich sind.

Es sind folgende Fälle bevorzugt:

Ausführungsform A-1:

spannungsloser Dunkelzustand: S(1) planar, S(2) planar
Spannung nur für S(1): S(1) homeotrop, S(2) planar
Spannung nur für S(2): S(1) planar, S(2) homeotrop

Hellzustand mit Spannung: S(1) homeotrop, S(2) homeotrop

Ausführungsform A-2:

spannungsloser Hellzustand: S(1) homeotrop, S(2) homeotrop
Spannung nur für S(1): S(1) planar, S(2) planar
Spannung nur für S(2): S(1) homeotrop, S(2) planar
Dunkelzustand mit Spannung: S(1) planar, S(2) planar

Ausführungsform A-3:

spannungsloser Zustand: S(1) homeotrop, S(2) planar
Dunkelzustand mit Spannung nur für S(1): S(1) planar, S(2) planar
Hellzustand mit Spannung nur für S(2): S(1) homeotrop, S(2) homeotrop

Ausführungsform A-4:

spannungsloser Zustand: S(1) planar, S(2) homeotrop
Hellzustand mit Spannung nur für S(1): S(1) homeotrop, S(2) homeotrop
Dunkelzustand mit Spannung nur für S(2): S(1) planar, S(2) planar

In den Ausführungsformen A-3 und A-4 sind die Schichten S(1) und S(2) unabhängig voneinander elektrisch schaltbar. Diese Ausführungsformen haben den Vorteil, dass ein bezüglich der Transmission mittlerer Zustand ohne Spannung vorliegt, aus dem durch Anlegen von Spannung jeweils nur für eine der beiden Schaltschichten in einen ein hoch transmissiven Schaltzustand bzw. in einen gering transmissiven Schaltzustand geschaltet werden kann.

Es ist bevorzugt, dass separates Schalten der Schichten S(1) und S(2) auch für die Ausführungsformen A-1 und A-2 möglich ist. In diesen Ausführungsformen ist durch Schalten von jeweils einer einzelnen der beiden Schichten S(1) und S(2) ein mittel transmissiver Schaltzustand möglich.

Gemäß einer bevorzugten Ausführungsform ist die erfindungsgemäße Vorrichtung dadurch gekennzeichnet, dass sie sämtliche Energie, die zur Schaltung der Schaltschicht nötig ist, selbst erzeugt. Die Vorrichtung ist also bevorzugt autonom und benötigt keine von außen zugeführte Energie. Dazu umfasst sie bevorzugt eine Vorrichtung zur Umwandlung von Lichtenergie in elektrische Energie, besonders bevorzugt eine Solarzelle.

In einer bevorzugten Ausführungsform der Erfindung ist die genannte Vorrichtung zur Umwandlung von Lichtenergie in elektrische Energie elektrisch mit den Mitteln zur elektrischen Schaltung der erfindungsgemäßen Vorrichtung verbunden. Die Bereitstellung der Energie durch die Solarzelle kann direkt oder indirekt, d. h. über eine dazwischengeschaltete Batterie oder Akkumulator oder sonstige Einheit zur Speicherung von Energie, erfolgen. Bevorzugt ist die Solarzelle außen an der Vorrichtung angebracht oder sie ist innen in der Vorrichtung angebracht, wie beispielsweise in WO 2009/141295 offenbart. Bevorzugt eingesetzt werden Solarzellen, welche bei diffusem Licht besonders effizient sind, sowie transparente Solarzellen. Es können beispielsweise Silicium-Solarzellen oder organische Solarzellen in den erfindungsgemäßen Vorrichtungen verwendet werden.

Wenn die erfindungsgemäße Vorrichtung eine Vorrichtung zur Umwandlung von Lichtenergie in elektrische Energie enthält, ist es bevorzugt, dass sie ein Lichtleitsystem enthält, welches Licht aus der Schaltschicht zu der Einheit leitet, welche Lichtenergie in elektrische Energie umwandelt.

Bevorzugt ist ein solches Lichtleitsystem so aufgebaut, wie es in WO 2009/141295 beschrieben ist. Das Lichtleitsystem sammelt und konzentriert Licht, das auf die Vorrichtung trifft. Bevorzugt sammelt und konzentriert es Licht, das von fluoreszierenden dichroitischen Farbstoffen in der schaltbaren Schicht enthaltend das flüssigkristalline Medium emittiert wird. Das Lichtleitsystem steht mit einer Vorrichtung zur Umwandlung von Lichtenergie in elektrische Energie, bevorzugt einer Solarzelle, in Kontakt, so dass das gesammelte Licht konzentriert auf diese trifft. Bevorzugt leitet das Lichtleitsystem Licht durch innere Totalreflexion. Bevorzugt ist die Vorrichtung dadurch gekennzeichnet, dass das Lichtleitsystem mindestens einen Wellenlängen-selektiven Spiegel aufweist, welcher bevorzugt gewählt ist aus einer oder mehreren cholesterischen Flüssigkristallschichten.

Die erfindungsgemäße Vorrichtung ist aus mehreren Schichten aufgebaut, welche flächig aufeinander liegen. Sie weist bevorzugt einen Schichtaufbau in der folgenden Reihenfolge auf, wobei die Schichten besonders bevorzugt unmittelbar aneinander angrenzen:

- Substratschicht, bevorzugt aus Glas oder Polymer
- elektrisch leitfähige transparente Schicht, bevorzugt ITO-Schicht
- Orientierungsschicht O(1)
- Schaltschicht S(1)
- Orientierungsschicht O(2)
- elektrisch leitfähige transparente Schicht, bevorzugt ITO-Schicht
- Substratschicht(en), bevorzugt aus Glas oder Polymer
- elektrisch leitfähige transparente Schicht, bevorzugt ITO-Schicht
- Orientierungsschicht O(3)
- Schaltschicht S(2)
- Orientierungsschicht O(4)
- elektrisch leitfähige transparente Schicht, bevorzugt ITO-Schicht
- Substratschicht, bevorzugt aus Glas oder Polymer.

Ein solcher Schichtaufbau ist in Fig. 1 gezeigt. Es können auch zwei oder mehr Substratschichten zwischen den Schichten O(2) und O(3) vorhanden sein, oder genau zwei Substratschichten getrennt durch einen Zwischenraum.

Bevorzugt folgen die Schichten O(1), S(1) und O(2) direkt aufeinander. Weiterhin bevorzugt folgen die Schichten O(3), S(2) und O(4) direkt aufeinander.

In einer bevorzugten Ausführungsform ist die erfindungsgemäße Vorrichtung Bestandteil eines Fensters, besonders bevorzugt eines Fensters enthaltend mindestens eine Glasfläche, ganz besonders bevorzugt eines Fensters, welche Mehrscheiben-Isolierglas enthält.

Unter Fenster wird dabei insbesondere eine Struktur in einem Gebäude verstanden, welche einen Rahmen und mindestens eine von diesem Rahmen umfasste Glasscheibe enthält. Bevorzugt enthält sie einen wärmeisolierenden Rahmen und zwei oder mehr Glasscheiben (Mehrscheiben-Isolierglas).

Gemäß einer bevorzugten Ausführungsform ist die erfindungsgemäße Vorrichtung direkt auf einer Glasfläche eines Fensters aufgebracht, besonders bevorzugt im Zwischenraum zwischen zwei Glasscheiben von Mehrscheiben-Isolierglas.

Wenn die erfindungsgemäße Vorrichtung Bestandteil eines Fensters oder einer vergleichbaren Vorrichtung ist, ist es bevorzugt, dass die erste Glasscheibe des Fensters durch eine Glasscheibe der Vorrichtung gebildet ist, so dass die Schichtenabfolge des Fensters enthaltend die Vorrichtung wie folgt ist:

- Glasschicht
- elektrisch leitfähige transparente Schicht, bevorzugt ITO-Schicht
- Orientierungsschicht O(1)

- Schaltschicht S(1)
- Orientierungsschicht O(2)
- elektrisch leitfähige transparente Schicht, bevorzugt ITO-Schicht
- Substratschicht, bevorzugt aus Glas oder Polymer
- elektrisch leitfähige transparente Schicht, bevorzugt ITO-Schicht
- Orientierungsschicht O(3)
- Schaltschicht S(2)
- Orientierungsschicht O(4)
- elektrisch leitfähige transparente Schicht, bevorzugt ITO-Schicht
- Glasschicht
- abgeschlossener Zwischenraum, gefüllt mit isolierendem Gas, beispielsweise Edelgas
- Glasschicht.

Bevorzugt ist das Fenster derart angeordnet, dass die zuerst genannte Schicht an den Außenraum und die zuletzt genannte Schicht an den Innenraum angrenzt. Eine umgekehrte Anordnung ist jedoch auch möglich und kann unter bestimmten Bedingungen bevorzugt sein.

Die oben angegebene Schichtenfolge des Fensters kann durch weitere Schichten, wie beispielsweise zusätzliche Glasschichten oder Schutzschichten, beispielsweise Schutzschichten gegen UV-Strahlung, gegen NIR-Strahlung, gegen VIS-Strahlung und/oder gegen physische Beschädigung, oder Schichten mit reflektierender Funktion, beispielsweise gegen NIR-Licht, ergänzt sein. Einzelne Funktionen dieser Schichten können auch in einer Schicht zusammengefasst sein. So kann beispielsweise die Funktion der elektrischen Leitfähigkeit und der NIR-Reflektion von ein und derselben Schicht erzielt werden.

Ein Fenster enthaltend die erfindungsgemäße Vorrichtung kann grundsätzlich auch durch Nachrüsten eines bereits bestehenden Fensters erhalten werden.

Ein Fenster, bevorzugt mit den oben angegebenen bevorzugten Merkmalen, ist weiterer Gegenstand der vorliegenden Anmeldung.

Erfindungsgemäß sind die Orientierungsachsen OA(1)* und OA(2)* der Moleküle des flüssigkristallinen Mediums in mindestens einem Schaltzustand nicht parallel zueinander angeordnet. Für die Orientierungsachsen OA(1)* und OA(2)* gilt, dass sie in diesem mindestens einen Schaltzustand bevorzugt einen Winkel von 50-90°, besonders bevorzugt einen Winkel von 70-90°, und ganz besonders bevorzugt einen Winkel von 85-90° zueinander bilden.

Gemäß einer bevorzugten Ausführungsform liegt die Orientierungsachse OA(1)* der Moleküle des flüssigkristallinen Mediums in der gesamten Schaltschicht S(1) gleichmäßig vor. Analog liegt gemäß einer bevorzugten Ausführungsform die Orientierungsachse OA(2)* der Moleküle des flüssigkristallinen Mediums in der gesamten Schaltschicht S(2) gleichmäßig vor. Es kann jedoch auch der Fall auftreten, dass die Orientierungsachse OA(1)* nur in der Region der Schaltschicht S(1),die an die Orientierungsschicht O(2) angrenzt, vorliegt, und/oder dass die Orientierungsachse OA(2)* nur in der Region der Schaltschicht S(2),die an die Orientierungsschicht O(3) angrenzt, vorliegt. In diesem Fall liegt bevorzugt eine verdrillte (twisted) Anordnung der Orientierungsachsen innerhalb der Schaltschicht vor.

Der Winkel zwischen OA(1)* und OA(2)*, d.h. deren Nicht-Parallelität, liegt bevorzugt in einem spannungslosen Schaltzustand der Vorrichtung vor, d. h. ohne Anlegen eines elektrischen Feldes. In diesem Fall wird der Winkel, den die Orientierungsachsen der Moleküle des flüssigkristallinen Mediums in den Schichten S(1) und S(2) zueinander bilden, bevorzugt durch die an die Schicht angrenzenden Orientierungsschichten bewirkt, d.h. für S(1) und damit OA(1)* durch O(1) und O(2), und für S(2) und damit OA(2)* durch O(3) und O(4).

Der Winkel kann jedoch auch im Schaltzustand unter Spannung der Vorrichtung vorliegen, d. h. unter Wirkung eines elektrischen Feldes. In diesem Fall wird durch das elektrische Feld eine Ausrichtung der Moleküle des flüssigkristallinen Mediums planar zur Ebene der Schaltschicht bewirkt. Dazu wird erfindungsgemäß durch einen definierten, unterschiedlich eingestellten pre-tilt-Winkel der Orientierungsschichten O(1) und O(2) für S(1) gegenüber den Orientierungsschichten O(3) und O(4) für S(2) im spannungslosen Schaltzustand erreicht, dass die Moleküle des flüssigkristallinen Mediums nicht völlig senkrecht auf der Ebene der Schaltschicht stehen, sondern einen leichten Winkel (pre-tilt-Winkel) aufweisen. Wird dann durch das Anlegen eines elektrischen Feldes eine parallele Ausrichtung zur Ebene der Schaltschicht erzwungen, so erfolgt die Ausrichtung derart, dass die Orientierungsachse weiterhin in einer Ebene mit der Orientierungsachse, wie sie im homeotropen Zustand unter Vorliegen des pre-tilt-Winkels vorlag, vorliegt. Dadurch geben indirekt auch in dieser Ausführungsform die Orientierungsschichten O(1) und O(2) für S(1) und die Orientierungsschichten O(3) und O(4) für S(2) die Orientierungsachsen OA(1)* bzw. OA(2)* vor.

Nochmals alternativ ist es möglich, dass der Winkel zwischen OA(1)* und OA(2)* in einem Schaltzustand vorliegt, in dem eine der beiden Schaltschichten im spannungslosen Schaltzustand vorliegt, und die andere der beiden Schaltschichten im Schaltzustand unter Spannung vorliegt.

Bevorzugt sind in der Vorrichtung die Orientierungsschichten O(2) und O(3) derart gestaltet, dass sie jeweils unterschiedliche Orientierungsachsen der Moleküle des flüssigkristallinen Mediums bewirken, welches an die Orientierungsschicht angrenzt.

Bevorzugt bewirken sie diese Orientierung in genau einem von zwei möglichen Schaltzuständen. Bevorzugt ist dieser Schaltzustand der spannungslose Schaltzustand der Vorrichtung. Weiterhin bevorzugt liegt das flüssigkristalline Medium in diesem Zustand in einer flüssigkristallinen Phase vor, bevorzugt einer nematisch flüssigkristallinen Phase.

Bevorzugt bewirken die Schichten O(2) und O(3) im spannungslosen Schaltzustand eine planare Ausrichtung der Moleküle des an sie angrenzenden flüssigkristallinen Mediums. Unter planarer Ausrichtung wird gemäß der allgemeinen Fachdefinition verstanden, dass die längste Achse der Moleküle des flüssigkristallinen Mediums parallel zur Ebene der Orientierungsschicht liegt.

Alternativ ist es aber auch möglich, dass die Schichten O(2) und O(3) im spannungslosen Schaltzustand eine homeotrope Ausrichtung der Moleküle des an sie angrenzenden flüssigkristallinen Mediums bewirken. Unter homeotroper Ausrichtung wird gemäß der allgemeinen Fachdefinition verstanden, dass die längste Achse der Moleküle des flüssigkristallinen Mediums senkrecht zur Ebene der Orientierungsschicht liegt.

Weiterhin ist auch der Fall möglich, dass eine der beiden Orientierungsschichten O(2) und O(3) eine homeotrope Ausrichtung der Moleküle des an sie angrenzenden flüssigkristallinen Mediums bewirkt, und die andere der beiden Orientierungsschichten O(2) und O(3) eine planare Ausrichtung der Moleküle des an sie angrenzenden flüssigkristallinen Mediums bewirkt.

Im Folgenden werden besonders bevorzugte Varianten der Ausführungsform A-1, wie oben vorgestellt, näher beschrieben:

Bevorzugt ist die Ausrichtung, die durch die Schichten O(2) und O(3) bewirkt wird, derart, dass die Orientierungsachsen der Moleküle des flüssigkristallinen Mediums, das an die entsprechende Schicht angrenzt, jeweils um einen Winkel von 50-90°, besonders bevorzugt um einen Winkel von 70-90°, und ganz besonders bevorzugt um einen Winkel von 85-90° gegeneinander verdreht sind. Eine solche besonders bevorzugte Anordnung ist in Fig. 2 gezeigt, wobei die Orientierungsachsen der Moleküle des jeweiligen an die Orientierungsschichten angrenzenden flüssigkristallinen Mediums mit Doppelpfeilen gekennzeichnet sind.

Die Doppelpfeile tragen dem Umstand Rechnung, dass die Orientierungsachsen keine Richtung besitzen. Somit haben Winkel größer 90° ihre äquivalenten Entsprechungen in Winkeln kleiner 90°.

Winkel von größer als 90° zwischen den Orientierungsachsen sind definitionsgemäß nicht möglich, da zwischen den beiden Enden der Pfeile nicht unterschieden wird, entsprechend der Situation bei den Molekülen des flüssigkristallinen Mediums, für die nur zwischen einer Längs- und zwei Querachsen unterschieden wird.

In einer bevorzugten Ausführungsform der Erfindung, A-1-1, sind die beiden Orientierungsschichten, die dieselbe Schaltschicht umgrenzen, jeweils so gestaltet, dass sie im Wesentlichen dieselbe Orientierungsachse der Moleküle des flüssigkristallinen Mediums der Schaltschicht bewirken. Eine solche bevorzugte Anordnung bewirkt also folgende ungefähre Winkel der Orientierungsachsen, beginnend bei 0° für O(1):

O(1): 0°
O(2): 0°
O(3): 90°
O(4): 90°

Eine solche Anordnung ist in Fig. 3 schematisch analog zu Fig. 2 gezeigt. im gezeigten Fall ist der Winkel von OA(1)* 0° und der von OA(2) 90°, so dass sie einen Winkel von 90° einschließen.

In einer alternativen, ebenfalls bevorzugten Ausführungsform der Erfindung sind die beiden Orientierungsschichten, die dieselbe Schaltschicht umgrenzen, so gestaltet, dass die von ihnen bewirkten Orientierungsachsen der Moleküle des flüssigkristallinen Mediums gegeneinander verdreht sind. Dabei bilden sie bevorzugt einen Winkel von 50-90°, besonders bevorzugt einen Winkel von 70-90°, und ganz besonders bevorzugt einen Winkel von 85-90° miteinander.

Besonders bevorzugt ist dies kombiniert mit der oben angegebenen Bevorzugung betreffend den Winkel der Orientierungsachsen, die von O(2) und O(3) bewirkt werden. Eine solche bevorzugte Anordnung, A-1-2, bewirkt also folgende ungefähre Winkel der Orientierungsachsen, beginnend bei 0° für O(1):

O(1): 0°
O(2): 90°
O(3): 0°
O(4): 90°

Eine solche Anordnung ist in Fig. 4 schematisch analog zu Fig. 2 gezeigt. im gezeigten Fall ist der Winkel von OA(1)* 90° und der von OA(2) 0°, so dass sie einen Winkel von 90° einschließen.

Es wird darauf hingewiesen, dass anstelle des Verdrillungswinkels von 90° auch ähnlich große Winkel, beispielsweise 80°, eingesetzt werden können.

Weiterhin ist auch eine Ausführungsform möglich und bevorzugt, bei der O(1) und O(2) eine Verdrillung um 90° bewirken, O(3) und O(4) jedoch keine Verdrillung bewirken. Eine solche bevorzugte Anordnung, A-1-3, bewirkt also folgende ungefähre Winkel der Orientierungsachsen, beginnend bei 0° für O(1):

O(1): 0°
O(2): 90°
O(3): 0°
O(4): 0°

Eine solche Anordnung ist in Fig. 5 schematisch analog zu Fig. 2 gezeigt. im gezeigten Fall ist der Winkel von OA(1)* 90° und der von OA(2) 0°, so dass sie einen Winkel von 90° einschließen.

Es wird darauf hingewiesen, dass anstelle des Verdrillungswinkels von 90° auch ähnlich große Winkel, beispielsweise 80°, eingesetzt werden können.

Schließlich ist auch eine Ausführungsform möglich und bevorzugt, bei der O(3) und O(4) eine Verdrillung um 90° bewirken, O(1) und O(2) jedoch keine Verdrillung bewirken. Eine solche bevorzugte Anordnung, A-1-4, bewirkt also folgende ungefähre Winkel der Orientierungsachsen, beginnend bei 0° für O(1):

O(1): 0°
O(2): 0°
O(3): 90°
O(4): 0°

Eine solche Anordnung ist in Fig. 6 schematisch analog zu Fig. 2 gezeigt. im gezeigten Fall ist der Winkel von OA(1)* 0° und der von OA(2) 90°, so dass sie einen Winkel von 90° einschließen.

Es wird darauf hingewiesen, dass anstelle des Verdrillungswinkels von 90° auch ähnlich große Winkel, beispielsweise 80°, eingesetzt werden können.

Bevorzugt werden die Moleküle der einen oder mehreren dichroitischen Verbindungen in der Schaltschicht grundsätzlich in gleicher Weise ausgerichtet wie die Moleküle des flüssigkristallinen Mediums. Dem Fachmann ist bekannt, wie das flüssigkristalline Medium und wie die dichroitischen Verbindungen zu wählen sind, damit diese Gleich-Ausrichtung erfolgt.

Im Schaltzustand unter Anlegen von Spannung werden die Moleküle des flüssigkristallinen Mediums bevorzugt weitgehend senkrecht zur Ebene der Schichten ausgerichtet. Dem Fachmann ist bekannt, in welcher Weise, abhängig von dem gewählten flüsigkristallinen Medium, die Spannung anzulegen ist, um dies zu erreichen.

Es ist auch möglich, ausgehend von einem wie oben beschriebenen Dunkelzustand der Vorrichtung durch Übergang in einen isotropen Zustand der Moleküle des flüssigkristallinen Mediums der Schaltschicht, wie beispielsweise in US 2010/0259698 beschrieben, einen relativ gesehen helleren Schaltzustand zu erreichen. Dabei ist kein Anlegen von elektrischer Spannung erforderlich.

Für das Paar von Orientierungsschichten O(1) und O(2) ist es bevorzugt, dass entweder beide Orientierungsschichten eine planare Ausrichtung der Moleküle des flüssigkristallinen Mediums bewirken, oder dass beide eine homeotrope Ausrichtung der Moleküle des flüssigkristallinen Mediums bewirken. Besonders bevorzugt bewirken beide Orientierungsschichten eine exakt gleiche Orientierungsachse der Moleküle des flüssigkristallinen Mediums der Schicht S(1), die an die Orientierungsschicht angrenzen. Es kann jedoch auch der Fall auftreten, dass beide Orientierungsschichten unterschiedliche Orientierungsachsen bewirken. Dadurch entsteht eine verdrillte (twisted) Anordnung der Orientierungsachsen innerhalb der Schaltschicht S(1).

Für das Paar von Orientierungsschichten O(3) und O(4) ist es bevorzugt, dass entweder beide Orientierungsschichten eine planare Ausrichtung der Moleküle des flüssigkristallinen Mediums bewirken, oder dass beide eine homeotrope Ausrichtung der Moleküle des flüssigkristallinen Mediums bewirken. Besonders bevorzugt bewirken beide Orientierungsschichten eine exakt gleiche Orientierungsachse der Moleküle des flüssigkristallinen Mediums der Schicht S(2), die an die Orientierungsschicht angrenzen. Es kann jedoch auch der Fall auftreten, dass beide Orientierungsschichten unterschiedliche Orientierungsachsen bewirken. Dadurch entsteht eine verdrillte (twisted) Anordnung der Orientierungsachsen innerhalb der Schaltschicht S(2).

Als Orientierungsschichten der erfindungsgemäßen Vorrichtung können beliebige dem Fachmann hierzu bekannte Schichten verwendet werden. Bevorzugt sind Polyimid-Schichten, besonders bevorzugt Schichten aus geriebenem Polyimid. Auf bestimmte, dem Fachmann bekannte Art geriebenes Polyimid führt zu einer Ausrichtung der Moleküle des flüssigkristallinen Mediums in Reiberichtung, wenn die Moleküle parallel zur Orientierungsschicht vorliegen (planare Ausrichtung). Dabei ist es bevorzugt, dass die Moleküle des flüssigkristallinen Mediums nicht völlig planar auf der Orientierungsschicht vorliegen, sondern einen leichten Aufstellwinkel aufweisen (pretilt). Zum Erreichen von vertikaler

Ausrichtung der Verbindungen des flüssigkristallinen Mediums zur Oberfläche der Orientierungsschicht (homeotrope Ausrichtung) wird bevorzugt auf bestimmte Art behandeltes Polyimid als Material für die Orientierungsschicht eingesetzt (Polyimid für sehr hohe Pretiltwinkel). Weiterhin können Polymere, die durch einen Belichtungsvorgang mit polarisiertem Licht erhalten wurden, als Orientierungsschicht zum Erreichen einer Ausrichtung der Verbindungen des flüssigkristallinen Mediums gemäß einer Orientierungsachse verwendet werden (photoalignment).

Die im Folgenden angegebenen bevorzugten Merkmale von Schaltschichten gelten bevorzugt sowohl für Schaltschicht S(1) als auch für Schaltschicht S(2).

Weiterhin ist es allgemein bevorzugt, dass die Schaltschichten S(1) und S(2) bezüglich ihrer chemischen Zusammensetzung gleich aufgebaut sind, und dass sie die gleichen physikalischen Eigenschaften aufweisen.

Erfindungsgemäß sind die Schaltschichten S(1) und S(2) dadurch gekennzeichnet, dass sie einen Anisotropiegrad R von 0.7 bis 0.9, bevorzugt von 0.7 bis 0.85, und besonders bevorzugt von 0.75 bis 0.8 aufweisen.

Der Anisotropiegrad R einer Schaltschicht wird aus den gemessenen Werten für die Extinktion bei Ausrichtung der Moleküle parallel zur Schwingungsebene des polarisierten Lichts (E(p)) und aus den gemessenen Werten für die Extinktion bei Ausrichtung der Moleküle senkrecht zur Schwingungsebene des polarisierten Lichts (E(s)) nach der Formel $R = [E(p)-E(s)] / [E(p) + 2*E(s)]$ berechnet. Das genau anzuwendende Verfahren ist in den Ausführungsbeispielen angeben.

Weiterhin bevorzugt hat die Schaltschicht einen Lichttransmissionsgrad des Hellzustands $\tau_{v\ hell}$ von mindestens 40%, bevorzugt mindestens 50%, besonders bevorzugt mindestens 60% und ganz besonders bevorzugt mindestens 70%.

Der Lichttransmissionsgrad des Hellzustands $\tau_{v\ hell}$ der Schaltschicht wird in Prozent angegeben. Er wird berechnet aus dem Verhältnis des Lichttransmissionsgrads der Schaltschicht im Hellzustand der Vorrichtung bezogen auf eine Vorrichtung mit Schaltschicht ohne Farbstoff als Referenz. Er wird nach der Europäischen Norm EN410, Gleichung (1) (Bestimmung der lichttechnischen und strahlungsphysikalischen Kenngrößen von Verglasungen) ermittelt aus den spektralen Transmissionsgraden unter Berücksichtigung der relativen spektralen Verteilung der Normlichtart und des spektralen Hellempfindlichkeitsgrads des Normalbeobachters. Das genau anzuwendende Verfahren ist in den Ausführungsbeispielen angeben.

Bevorzugt hat die Schaltschicht eine Dicke zwischen 1 und 100 $\mu$m, besonders bevorzugt zwischen 5 und 50 $\mu$m. Weiterhin ist es bevorzugt, dass die Schaltschichten S(1) und S(2) gleich dick sind.

Bevorzugt ist die Vorrichtung dadurch gekennzeichnet, dass die Schaltschichten drei oder mehr unterschiedliche dichroitische Verbindungen enthalten.

Es ist weiterhin bevorzugt, dass mindestens einer der dichroitischen Verbindungen lumineszierend ist, bevorzugt fluoreszierend. Dies ist insbesondere bevorzugt, wenn die von den Verbindungen absorbierte Lichtenergie wieder emittiert werden soll, beispielsweise um zur Energiegewinnung durch eine Solarzelle genutzt zu werden.

Unter Fluoreszenz wird dabei verstanden, dass eine Verbindung durch Absorption von Licht einer bestimmten Wellenlänge in einen elektronisch angeregten Zustand versetzt wird, wobei die Verbindung anschließend unter Emission von Licht in den Grundzustand übergeht. Bevorzugt hat das emittierte Licht längere Wellenlänge als das absorbierte Licht. Weiterhin bevorzugt ist der Übergang vom angeregten Zustand in den Grundzustand spin-erlaubt, erfolgt also ohne Änderung des Spins. Weiterhin bevorzugt ist die Lebensdauer des angeregten Zustands der fluoreszierenden Verbindung kürzer als $10^{-5}$ s, besonders bevorzugt kürzer als $10^{-6}$ s, ganz besonders bevorzugt zwischen $10^{-9}$ und $10^{-7}$s.

Gemäß einer alternativen Ausführungsform, die unter bestimmten Bedingungen ebenfalls bevorzugt sein kann, sind die dichroitischen Verbindungen nicht fluoreszierend.

Die Absorptionsspektren der dichroitischen Farbstoffe im flüssigkristallinen Medium ergänzen sich bevorzugt derart, dass für das Auge der Eindruck von schwarzer Farbe entsteht. Bevorzugt decken die zwei oder mehr dichroitischen Farbstoffe des flüssigkristallinen Mediums einen großen Teil des sichtbaren Spektrums ab. Bevorzugt wird dies dadurch erreicht, dass mindestens ein dichroitischer Farbstoff rotes Licht absorbiert, mindestens einer grünes bis gelbes Licht absorbiert und mindestens einer blaues Licht absorbiert.

Wie genau eine Mischung von Farbstoffen hergestellt werden kann, die für das Auge schwarz bzw. grau erscheint, ist dem Fachmann bekannt und beispielsweise in Manfred Richter, Einführung in die Farbmetrik, 2. Auflage, 1981, ISBN 3-11-008209-8, Verlag Walter de Gruyter & Co., beschrieben.

Weiterhin bevorzugt absorbieren die dichroitischen Farbstoffe vorwiegend Licht im UV-VIS-NIR-Bereich, d. h. in einem Wellenlängenbereich von 320 bis 2000 nm. UV-Licht, VIS-Licht und NIR-Licht sind dabei wie oben definiert. Besonders bevorzugt weisen die dichroitischen Farbstoffe Absorptionsmaxima auf, die im Bereich von 400 bis 1300 nm liegen.

Der Anteil aller dichroitischen Farbstoffe zusammen im flüssigkristallinen Medium beträgt bevorzugt insgesamt 0.01 bis 10 Gew.-%, besonders bevorzugt 0.1 bis 7 Gew.-% und ganz besonders bevorzugt 0.2 bis 7 Gew.-%. Der Anteil eines einzelnen dichroitischen Farbstoffs beträgt bevorzugt 0.01 bis 10 Gew.-%, bevorzugt 0.05 bis 7 Gew.-% und ganz besonders bevorzugt 0.1 bis 7 Gew.-%.

Weiterhin bevorzugt sind die dichroitischen Farbstoffe gewählt aus den in B. Bahadur, Liquid Crystals - Applications and Uses, Vol. 3, 1992, World Scientific Publishing, Abschnitt 11.2.1 angegebenen Farbstoffklassen und besonders bevorzugt aus den in der dort vorhandenen Tabelle aufgeführten expliziten Verbindungen.

Bevorzugt ist mindestens eine dichroitische Verbindung, besonders bevorzugt sind alle dichroitischen Verbindungen gewählt aus Azoverbindungen, Anthrachinonen, Methinverbindungen, Azomethinverbindungen, Merocyaninverbindungen, Naphthochinonen, Tetrazinen, Perylenen, Terrylenen, Quaterrylenen, höheren Rylenen, Benzothiadiazolen, Diketopyrrolopyrrolen, Squarainen, und Pyrromethenen, beispielsweise Bor-Dipyrromethenen (BODIPYs).

Besonders bevorzugt ist mindestens eine dichroitische Verbindung, ganz besonders bevorzugt sind alle dichroitischen Verbindungen gewählt aus Azofarbstoffen, Perylenen, Terrylenen, Benzothiadiazolen und Diketopyrrolopyrrolen.

Bevorzugte Squarain-Farbstoffe entsprechen der folgenden Formel (I), und bevorzugte Bor-Dipyrromethan-Farbstoffe entsprechen der folgenden Formel (II)

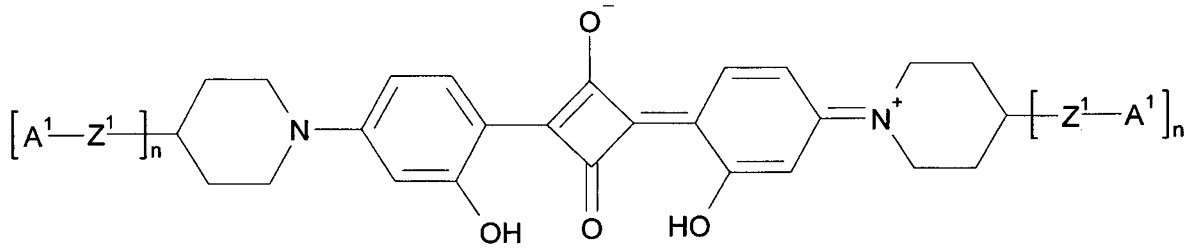

Formel (I)

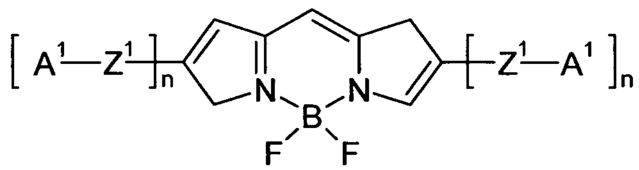

Formel (II),

wobei

$A^1$ bei jedem Auftreten gleich oder verschieden ein aliphatischer, heteroaliphatischer, aromatischer oder heteroaromatischer Ring ist, der mit einem oder mehreren Resten $R^1$ substituiert sein kann;

$Z^1$ bei jedem Auftreten gleich oder verschieden gewählt ist aus einer Einfachbindung, -C(=O)-O-, -O-(C=O)-, O, S, $-CF_2-CF_2-$, $-CF_2-O-$, $-O-CF_2-$, $-CH_2-CH_2-$, -CH=CH-, -CF=CF-, -CF=CH-, -CH=CF-, -C≡C-, $-OCH_2-$ und $-CH_2O-$;

$R^1$ bei jedem Auftreten gleich oder verschieden ein beliebiger organischer Rest ist; und

n bei jedem Auftreten gleich oder verschieden 1, 2, 3, 4 oder 5 ist; und

die Strukturen der Formel (I) und (II) an jeder freien Position jeweils mit Resten $R^1$ substituiert sein können.

$A^1$ ist bevorzugt bei jedem Auftreten gleich oder verschieden wahlweise substituiertes 1,4-Cyclohexylen oder 1,4-Phenylen.

Der Index n ist bevorzugt bei jedem Auftreten gleich oder verschieden 1, 2, oder 3.

$R^1$ ist bevorzugt bei jedem Auftreten gleich oder verschieden H, D, F, Cl, CN, $R^2$-O-CO-, $R^2$-CO-O-, oder eine Alkyl- oder Alkoxygruppe mit 1 bis 10 C-Atomen, oder eine Alkenylgruppe mit 2 bis 10 C-Atomen, wobei $R^2$ eine Alkylgruppe mit 1 bis 10 C-Atomen oder eine Aryl- oder Heteroarylgruppe mit 5 bis 20 C-Atomen ist.

Anthrachinonfarbstoffe sind beispielsweise beschrieben in EP 34832, EP 44893, EP 48583, EP 54217, EP 56492, EP 59036, GB 2065158, GB 2065695, GB 2081736, GB 2082196, GB 2094822, GB 2094825, JP-OS 55-123673, DE 3017877, DE 3040102, DE 3115147, DE 3115762, DE 3150803 und DE 3201120, Naphthochinonfarbstoffe sind beispielsweise beschrieben in DE 3126108 und DE 3202761, Azofarbstoffe in EP 43904, DE 3123519, WO 82/2054, GB 2079770, JP-OS 56-57850, JP-OS 56-104984, US 4308161, US 4308162, US 4340973, T. Uchida, C. Shishido, H. Seki und M. Wada: Mol. Cryst. Lig. Cryst. 39, 39-52 (1977) und H. Seki, C. Shishido, S. Yasui und T. Uchida: Jpn. J. Appl. Phys. 21, 191-192 (1982), Perylene in EP 60895, EP 68427 und WO 82/1191, Bor-Dipyrromethene in A. Loudet

et al., Chem. Rev. 2007, 4891-4932, und Squaraine in K. Law et al., Chem. Rev. 1993, 449-486.

Ganz besonders bevorzugt sind Rylen-Farbstoffe, wie sie beispielsweise in EP 2166040, US 2011/0042651, EP 68427, EP 47027, EP 60895, DE 3110960, EP 698649 und in der noch nicht offengelegten Anmeldung EP 12008320.9 offenbart sind.

Weiterhin ganz besonders bevorzugt sind Benzothiadiazole, wie sie beispielsweise in der noch nicht offengelegten Anmeldung EP13002711.3 offenbart sind.

Weiterhin ganz besonders bevorzugt sind Diketopyrrolopyrrole, wie sie beispielsweise in der noch nicht offengelegten Anmeldung EP13005918.1 offenbart sind.

Beispiele für bevorzugte dichroitische Farbstoffe, die im flüssigkristallinen Medium enthalten sein können, sind in der folgenden Tabelle abgebildet.

| |
|---|
| 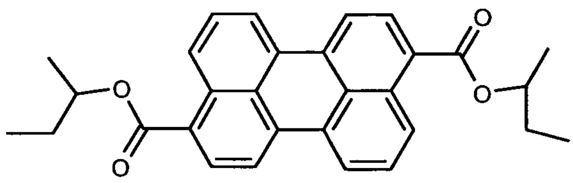 |
| |
| 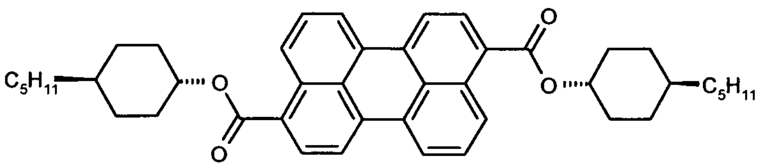 |
| |
| 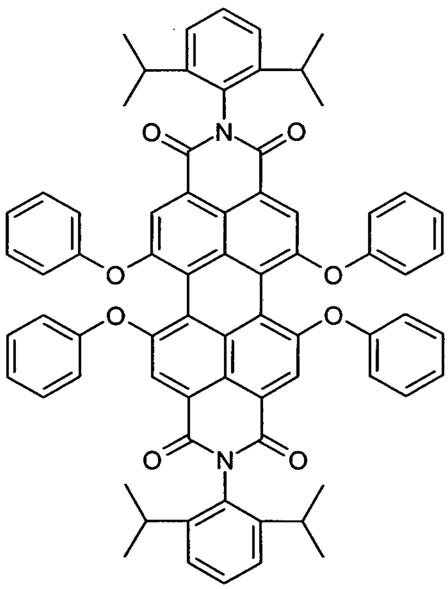 |
| |

| |
|---|
| 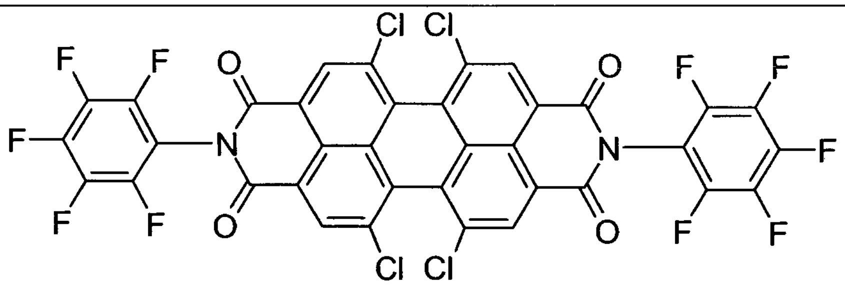 |
| |
| 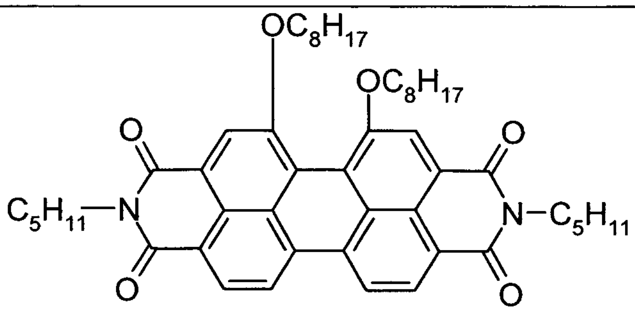 |
| |
| 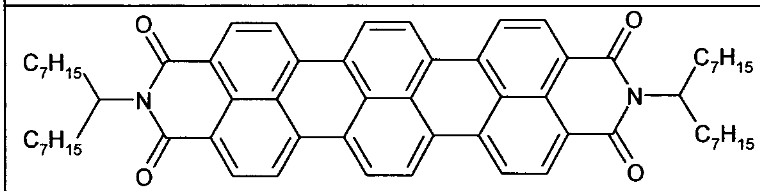 |
| |
| 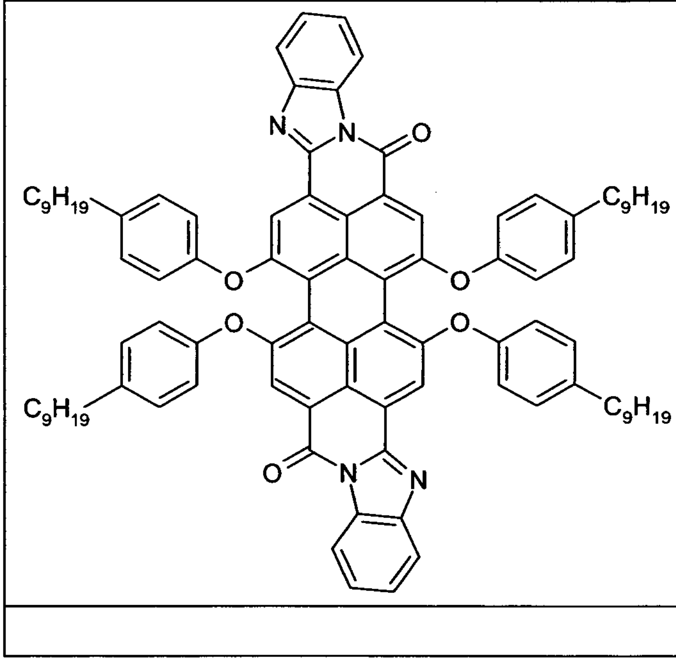 |
| |

| |
|---|
| 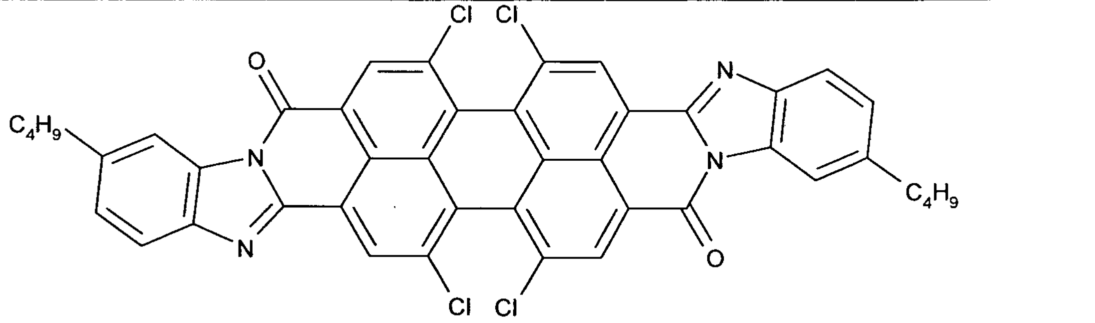 |
| |
| 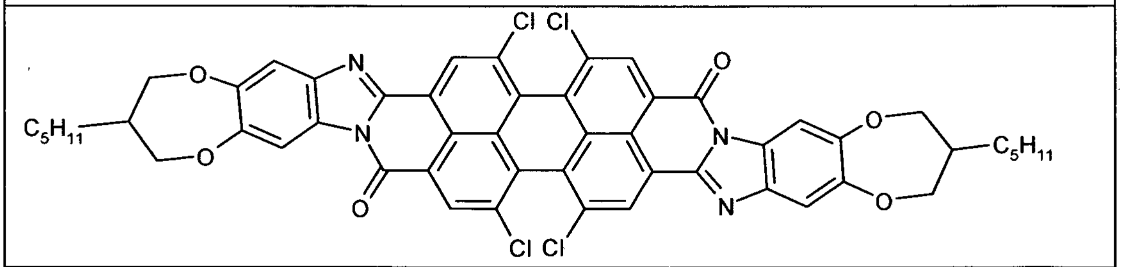 |
| |
| 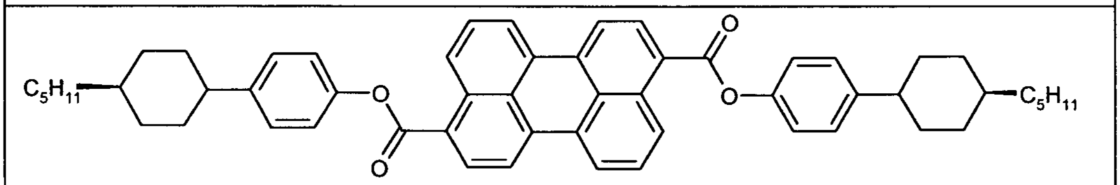 |
| |
| 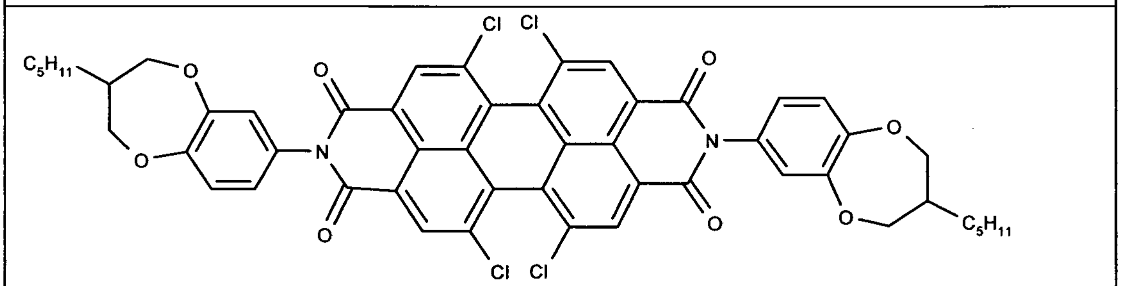 |
| |
| 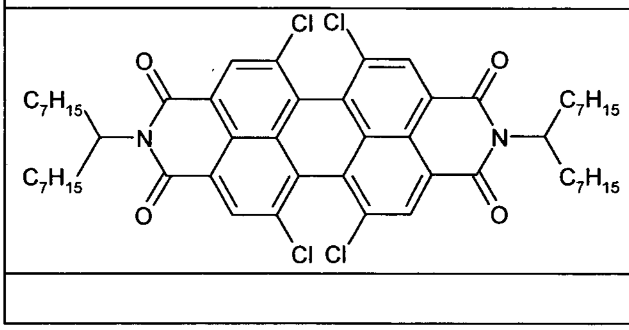 |
| |

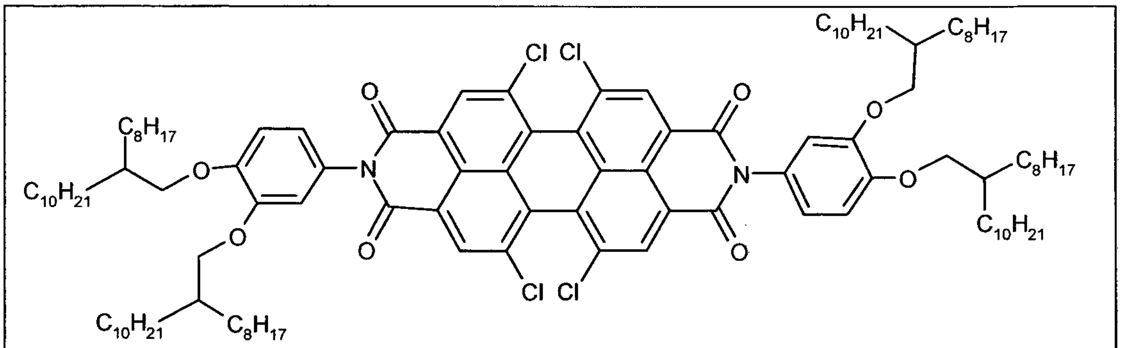

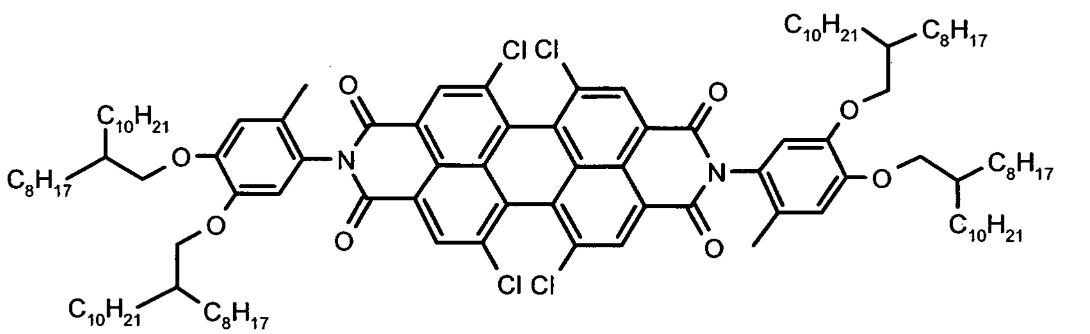

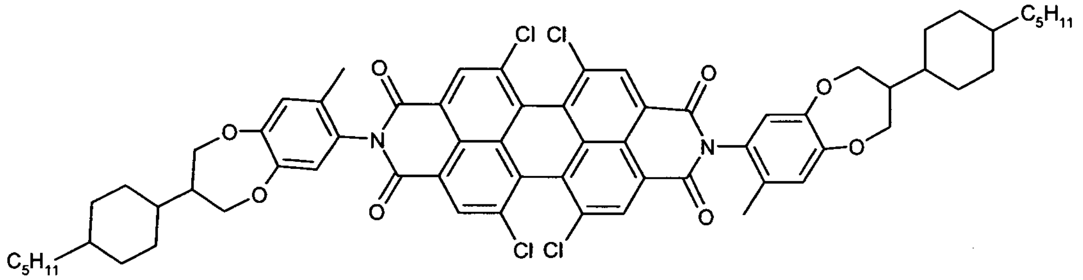

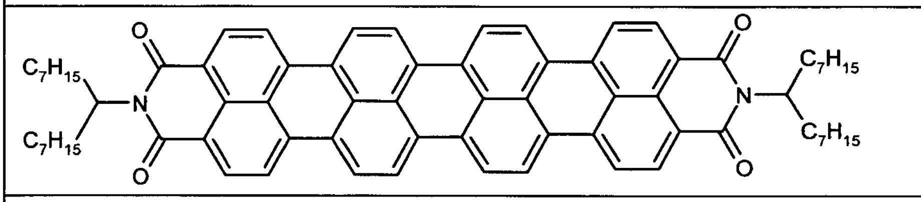

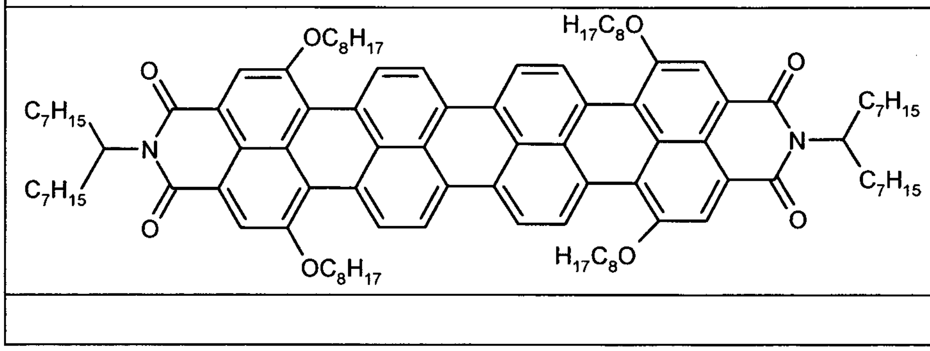

| |
|---|
| 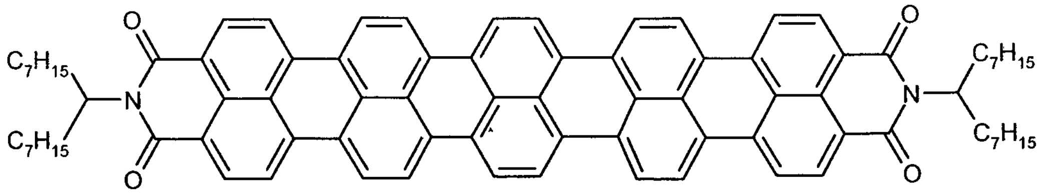 |
| |
| 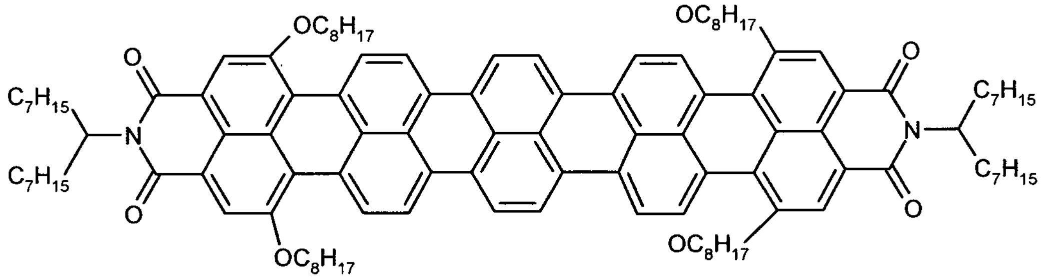 |
| |
| 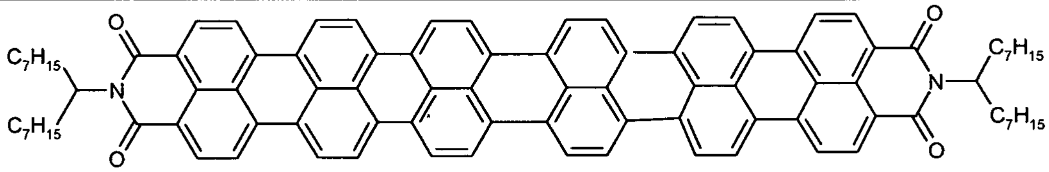 |
| |
| 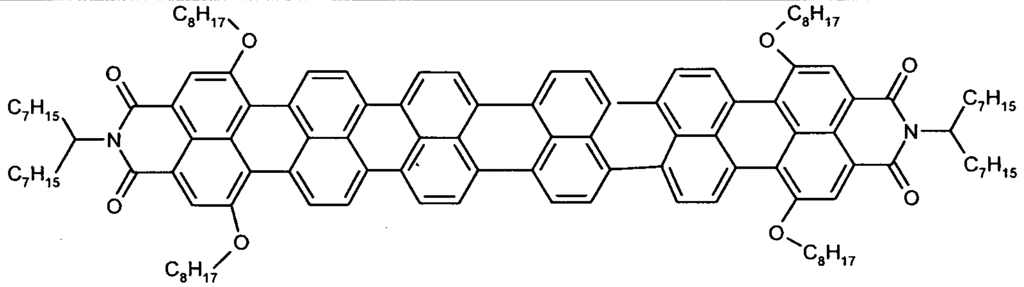 |
| |
| 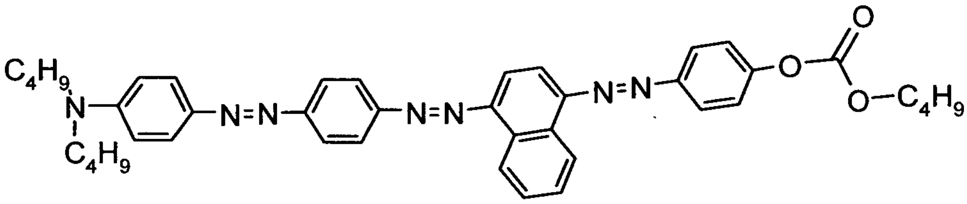 |
| |
| 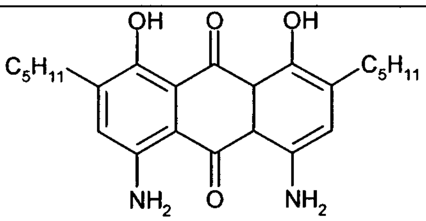 |
| |

| |
|---|
| 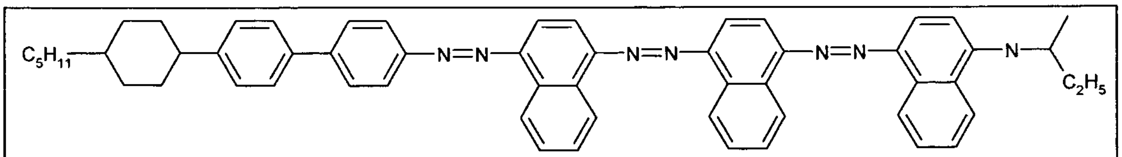 |
| |
| 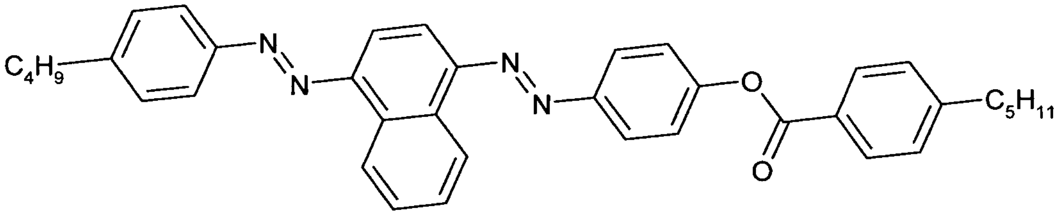 |
| |
| 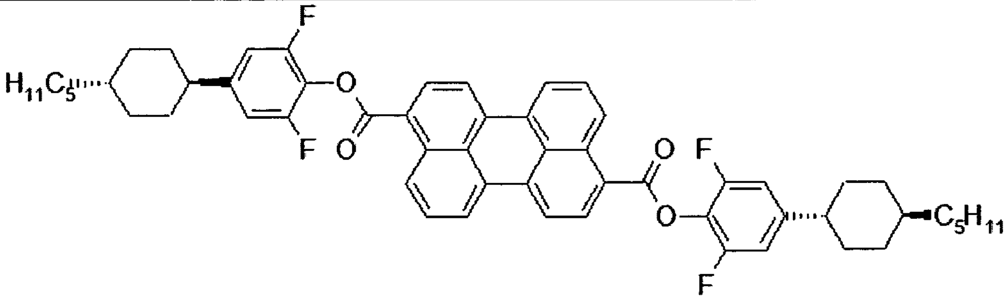 |
| |
| 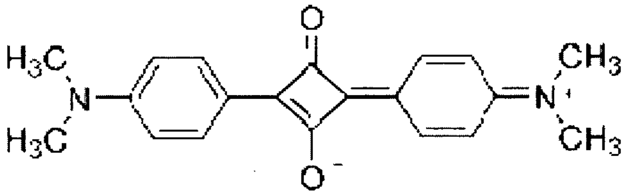 |
| |
| 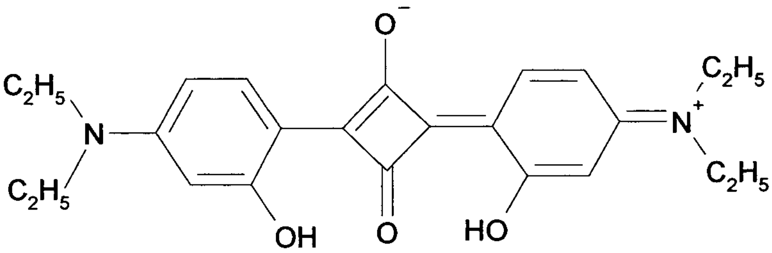 |
| |

| |
|---|
| 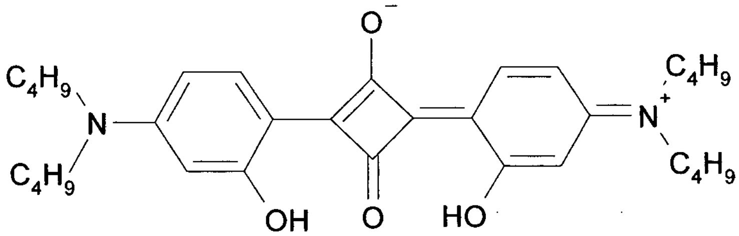 |
| |
| 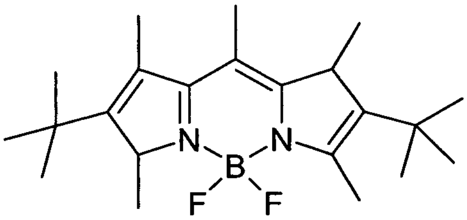 |
| |
| 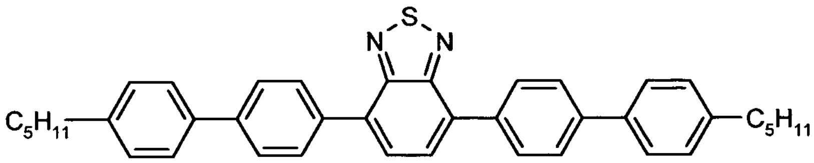 |
| |
| 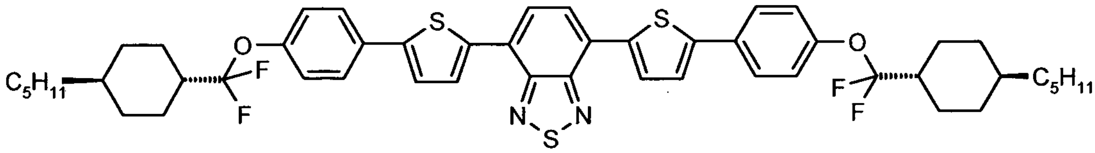 |
| |
| 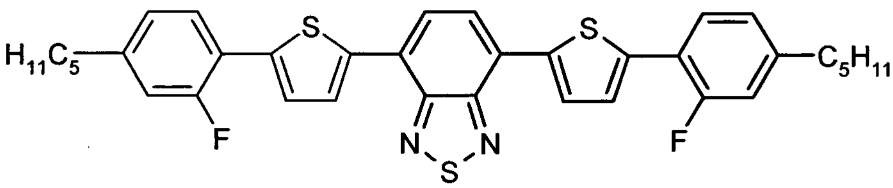 |
| |
| 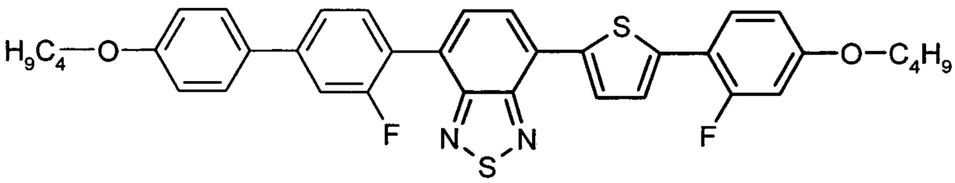 |
| |

| |
|---|
| 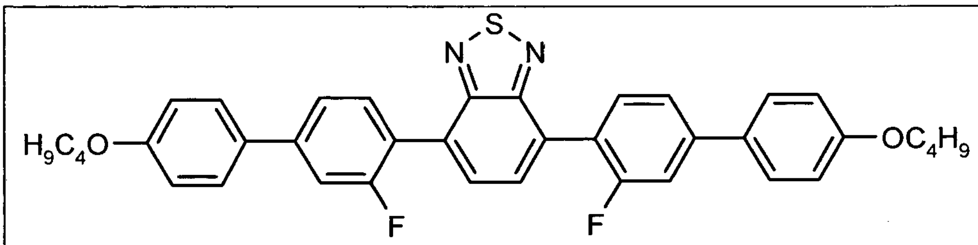 |
| |
| 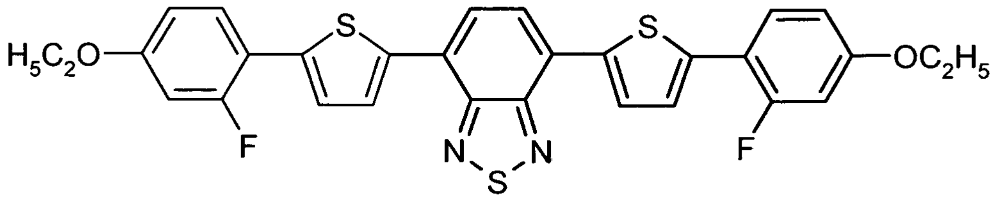 |
| |
| 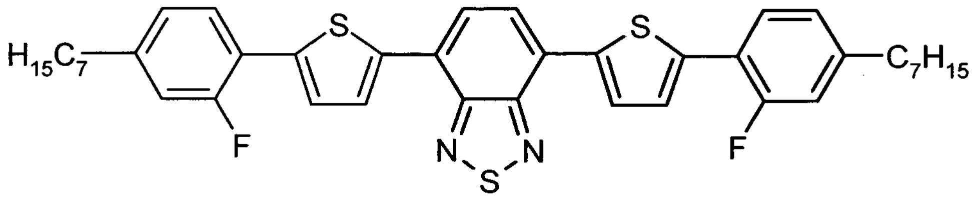 |
| |
| 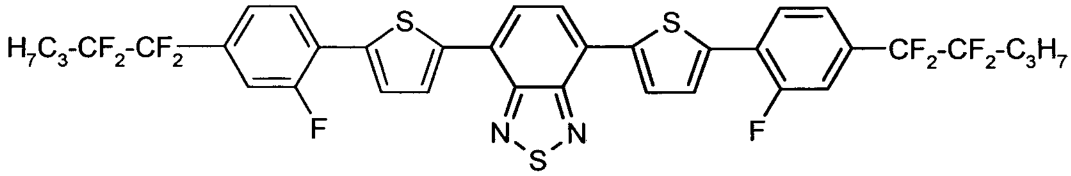 |
| |
| 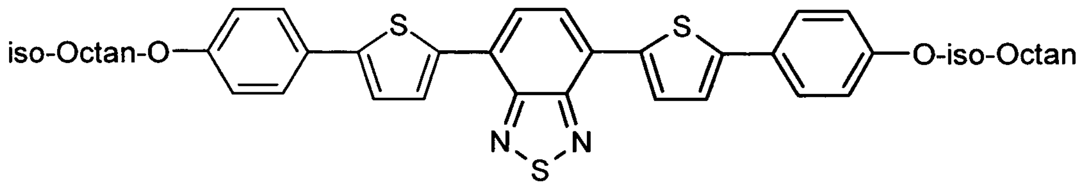 |
| |
| 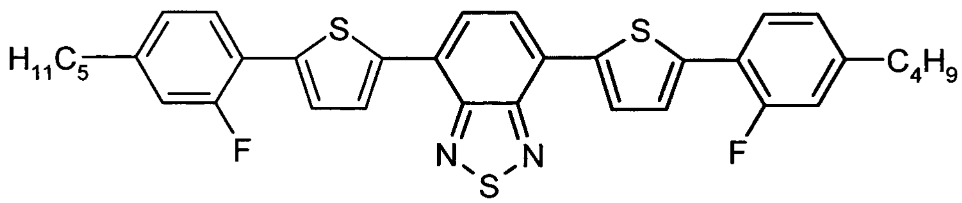 |
| |

| |
|---|
| 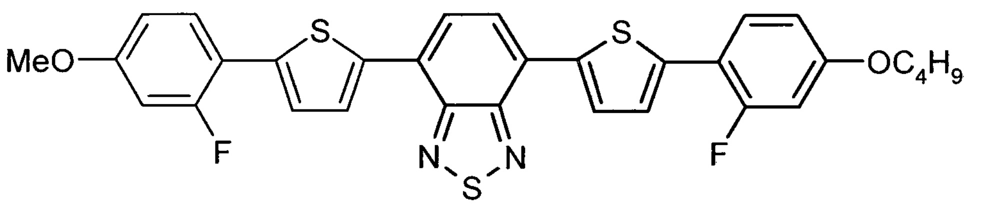 |
| |
| 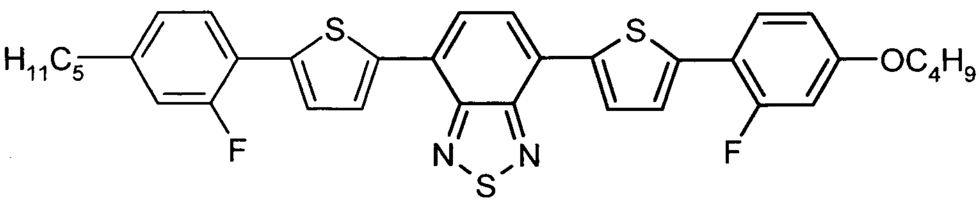 |
| |
| 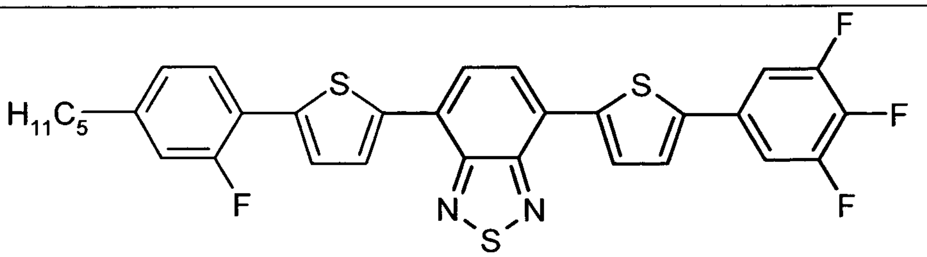 |
| |
| 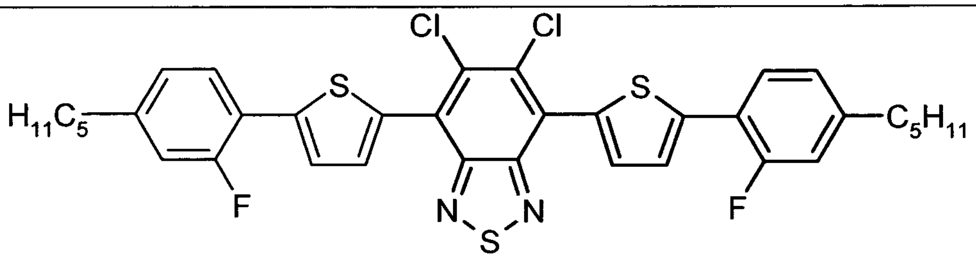 |
| |
| 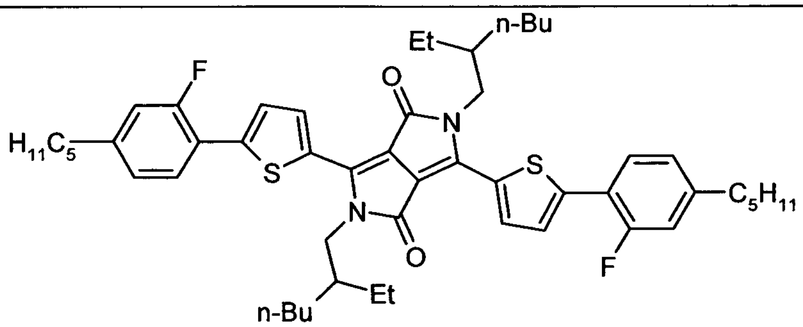 |
| |

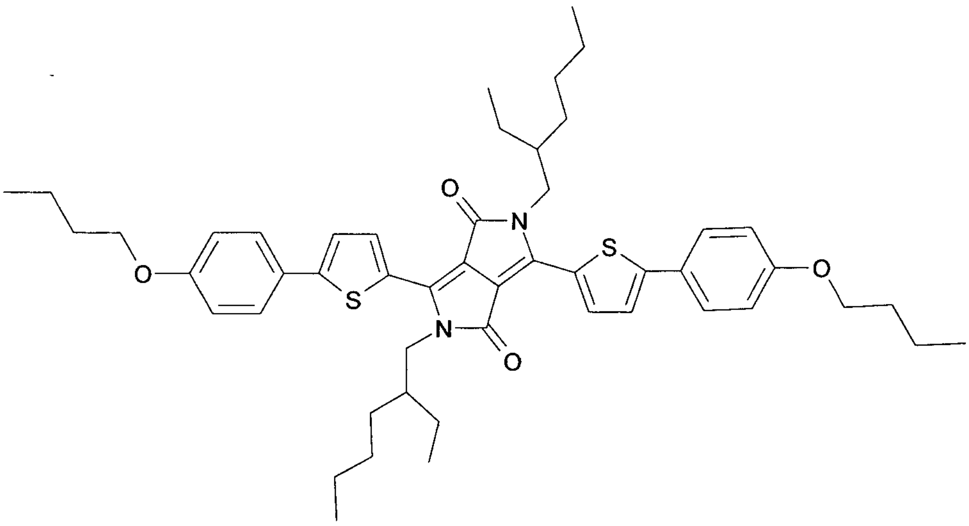

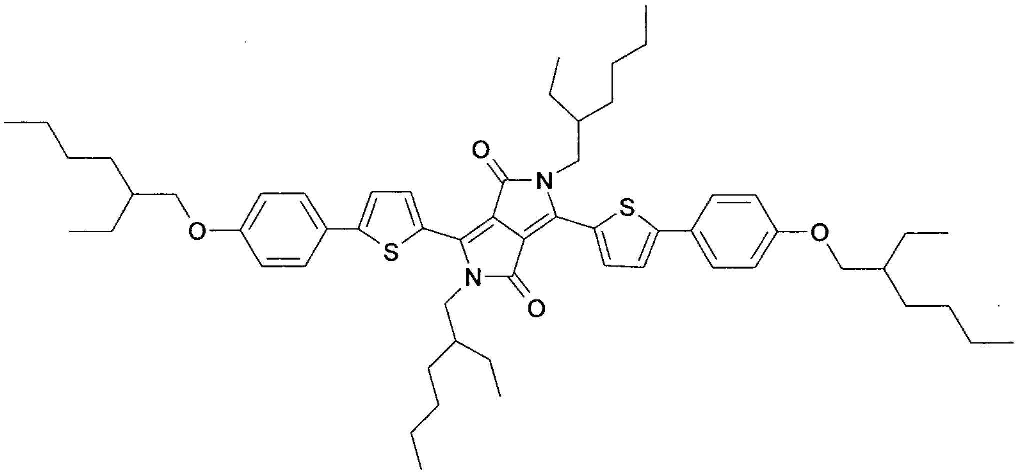

Die Schaltschicht der Vorrichtung umfasst erfindungsgemäß ein flüssigkristallines Medium.

Bevorzugt ist das flüssigkristalline Medium bei Betriebstemperatur der Vorrichtung nematisch flüssigkristallin. Besonders bevorzugt ist es in einer Spanne von +-20 °C, ganz besonders bevorzugt in einer Spanne von +-30 °C oberhalb und unterhalb der Betriebstemperatur der Vorrichtung nematisch flüssigkristallin.

Erfindungsgemäß hat das flüssigkristalline Medium einen Klärpunkt, bevorzugt einen Phasenübergang von einem nematisch flüssigkristallinen Zustand zu einem isotropen Zustand, im Temperaturbereich von 70 °C bis 170 °C, bevorzugt von 90 °C bis 160 °C, besonders bevorzugt von 95 °C bis 150 °C und ganz besonders bevorzugt von 105 °C bis 140 °C.

Bevorzugt ist weiterhin die dielektrische Anisotropie $\Delta\varepsilon$ des flüssigkristallinen Mediums größer als 3, besonders bevorzugt größer als 7.

Alternativ kann es bevorzugt sein, dass die dielektrische Anisotropie $\Delta\varepsilon$ des flüssigkristallinen Mediums kleiner ist als -2, bevorzugt kleiner als -3.

Weiterhin bevorzugt umfasst das flüssigkristalline Medium 3 bis 20 verschiedene Verbindungen, bevorzugt 8 bis 18, besonders bevorzugt 10 bis 16 verschiedene Verbindungen.

Weiterhin bevorzugt hat das flüssigkristalline Medium eine optische Anisotropie ($\Delta n$) von 0.01 bis 0.3, besonders bevorzugt von 0.04 bis 0.27.

Weiterhin bevorzugt hat das flüssigkristalline Medium einen spezifischen elektrischen Widerstand von mehr als $10^{10}$ Ohm*cm.

Verbindungen, welche als Bestandteile des flüssigkristallinen Mediums verwendet werden können, sind dem Fachmann bekannt und können beliebig gewählt werden.

Weiterhin ist es bevorzugt, dass das flüssigkristalline Medium mindestens eine Verbindung enthält, welche Strukturelemente basierend auf 1,4-Phenylenen und 1,4-Cyclohexylenen aufweist. Besonders bevorzugt ist es, dass

das flüssigkristalline Medium der Schaltschicht mindestens eine Verbindung enthält, welche 2, 3 oder 4, besonders bevorzugt 3 oder 4 Strukturelemente basierend auf 1,4-Phenylenen und 1,4-Cyclohexylenen aufweist.

Das flüssigkristalline Medium kann einen oder mehrere chirale Dotierstoffe enthalten. Diese liegen dann bevorzugt in einer Gesamtkonzentration von 0.01 bis 3 Gew.-%, besonders bevorzugt von 0.05 bis 1 Gew.-% vor. Um hohe Werte für die Verdrillung zu erhalten, kann die Gesamtkonzentration der chiralen Dotierstoffe auch höher als 3 Gew.-% gewählt werden, bevorzugt bis maximal 10 Gew.-%.

Das flüssigkristalline Medium enthält bevorzugt einen oder mehrere Stabilisatoren. Die Gesamtkonzentration der Stabilisatoren liegt bevorzugt zwischen 0.00001 und 10 Gew.-%, besonders bevorzugt zwischen 0.0001 und 1 Gew.-% der Gesamtmischung.

Bevorzugt ist die Vorrichtung dadurch gekennzeichnet, dass sie keinen Polarisator auf Polymerbasis, besonders bevorzugt keinen in fester Materiephase vorliegenden Polarisator und ganz besonders bevorzugt überhaupt keinen Polarisator umfasst.

Die Vorrichtung kann jedoch gemäß einer alternativen Ausführungsform auch einen oder mehrere Polarisatoren aufweisen. Bevorzugt sind in diesem Fall Linearpolarisatoren.

Wenn genau ein Polarisator vorhanden ist, so ist dessen Absorptionsrichtung bevorzugt senkrecht stehend zur Orientierungsachse der Verbindungen des flüssigkristallinen Mediums der erfindungsgemäßen Vorrichtung auf derjenigen Seite der Schaltschicht, auf der sich der Polarisator befindet.

In der erfindungsgemäßen Vorrichtung können sowohl absorptive als auch reflektive Polarisatoren eingesetzt werden. Bevorzugt werden Polarisatoren verwendet, die als dünne optische Filme vorliegen. Beispiele für reflektive Polarisatoren, die in der erfindungsgemäßen Vorrichtung verwendet werden können, sind DRPF- (diffusive reflective polariser film, 3M), DBEF- (dual brightness enhanced film, 3M), DBR- (layered-polymer distributed Bragg reflectors, wie in US 7,038,745 und US 6,099,758 beschrieben) und APF-Filme (advanced polariser film, 3M, vgl. Technical Digest SID 2006, 45.1, US 2011/0043732 und US 7023602). Weiterhin können Polarisatoren basierend auf Drahtgittern (WGP, wire-gridpolarisers), welche Infrarotlicht reflektieren, eingesetzt werden. Beispiele für absorptive Polarisatoren, welche in den erfindungsgemäßen Vorrichtungen eingesetzt werden können, sind der Itos XP38-Polarisatorfilm und der Nitto Denko GU-1220DUN-Polarisatorfilm. Ein Beispiel für einen circularen Polarisator, welcher erfindungsgemäß verwendet werden kann, ist der Polarisator APNCP37-035-STD (American Polarizers). Ein weiteres Beispiel ist der Polarisator CP42 (ITOS).

Weiterhin kann die Vorrichtung Schutzschichten umfassen, beispielsweise Schutzschichten gegen UV-Strahlung, gegen NIR-Strahlung, gegen VIS-Strahlung und/oder gegen physische Beschädigung.

Anstelle der oben angebenen Materialien Glas und Polymer für die Substratschichten können auch andere Materialien mit ähnlichen Eigenschaften eingesetzt werden. Bevorzugte Materialien der Substratschicht sind Glas oder die Polymere PET, PEN, PVB oder PMMA.

Weiterhin ist es bevorzugt, dass die erfindungsgemäße Vorrichtung eine oder mehrere Glasschichten umfasst, welche in entspiegelter Ausführung vorliegen. Die Herstellung von Antireflexionsbeschichtungen erfolgt durch Beschichtungsmethoden der Dünnschichttechnik. Dazu zählen beispielsweise die physikalische Gasphasenabscheidung, wie thermisches Verdampfen und Sputterdeposition. Die Entspiegelung kann durch ein Einfachschichtsystem oder durch ein Mehrfachschichtsystem erreicht werden. Bevorzugt liegt bei der erfindungsgemäßen Vorrichtung mindestens diejenige Glasschicht in entspiegelter Ausführung vor, die an die äußere Umgebung angrenzt, d.h. dem einfallenden Sonnenlicht direkt ausgesetzt ist.

## Beschreibung der Abbildungen

Fig. 1 zeigt eine bevorzugte Schichtenabfolge einer erfindungsgemäßen Vorrichtung .

Fig. 2 zeigt für eine bevorzugte Ausführungsform der Vorrichtung die unterschiedliche Orientierungsachse der Moleküle des direkt an die Orientierungsschichten O(2) bzw. O(3) angrenzenden flüssigkristallinen Mediums mittels Doppelpfeilen.

Fig. 3 zeigt für eine bevorzugte Ausführungsform der Vorrichtung, A-1-1, die unterschiedliche Orientierungsachse der Moleküle des direkt an die Orientierungsschichten O(1), O(2), O(3) bzw. O(4) angrenzenden flüssigkristallinen Mediums mittels Doppelpfeilen, wobei die Orientierungsachsen jeweils für O(1) und O(2) gleich sind und jeweils für O(3) und O(4) gleich sind.

Fig. 4 zeigt für eine bevorzugte Ausführungsform der Vorrichtung, A-1-2, die unterschiedliche Orientierungsachse der Moleküle des direkt an die Orientierungsschichten O(1), O(2), O(3) bzw. O(4) angrenzenden flüssigkristallinen

Mediums mittels Doppelpfeilen, wobei die Orientierungsachsen jeweils für O(1) und O(2) um 90° gegeneinander verdreht sind, und jeweils für O(3) und O(4) um 90° gegeneinander verdreht sind.

Fig. 5 zeigt für eine bevorzugte Ausführungsform der Vorrichtung, A-1-3, die unterschiedliche Orientierungsachse der Moleküle des direkt an die Orientierungsschichten O(1), O(2), O(3) bzw. O(4) angrenzenden flüssigkristallinen Mediums mittels Doppelpfeilen, wobei die Orientierungsachsen jeweils für O(1) und O(2) C, und jeweils für O(3) und O(4) gleich sind.

Fig. 6 zeigt für eine bevorzugte Ausführungsform der Vorrichtung, A-1-4, die unterschiedliche Orientierungsachse der Moleküle des direkt an die Orientierungsschichten O(1), 0(2), O(3) bzw. O(4) angrenzenden flüssigkristallinen Mediums mittels Doppelpfeilen, wobei die Orientierungsachsen jeweils für O(1) und O(2) gleich sind, und jeweils für O(3) und O(4) um 90° gegeneinander verdreht sind.

**Beschreibung der Bezugszeichen**

1 Substratschicht, bevorzugt aus Glas oder Polymer
2 elektrisch leitfähige Schicht
3 Orientierungsschicht O(1)
4 Schaltschicht S(1)
5 Orientierungsschicht O(2)
6 Orientierungsschicht O(3)
7 Schaltschicht S(2)
8 Orientierungsschicht O(4)

**Ausführungsbeispiele**

Im Folgenden werden Strukturen von flüssigkristallinen Verbindungen durch Abkürzungen wiedergegeben (Akronyme). Diese Abkürzungen werden in WO 2012/052100 explizit vorgestellt und erklärt (S. 63 - 89), so dass zur Erläuterung der Abkürzungen in der vorliegenden Anmeldung auf die genannte offengelegte Anmeldung verwiesen wird.

Alle physikalischen Eigenschaften werden nach "Merck Liquid Crystals, Physical Properties of Liquid Crystals", Status Nov. 1997, Merck KGaA, Deutschland bestimmt und gelten für eine Temperatur von 20°C. Der Wert von $\Delta n$ wird bei 589 nm bestimmt und der Wert von $\Delta\varepsilon$ wird bei 1 kHz bestimmt, sofern nicht jeweils explizit anders angegeben.

A) Herstellung der Vorrichtungen und erhaltene Ergebnisse

Es werden die erfindungsgemäßen Vorrichtungen E-1, E-2, E-4 bis E-8, und E12 bis E-15 hergestellt, sowie die Vergleichsvorrichtungen V-1 bis V-15.

Die erfindungsgemäßen Vorrichtungen weisen die folgende Schichtabfolge auf, bestehend aus zwei gekreuzten antiparallel geriebenen Guest-Host-Zellen (Zelle-1 und Zelle-2).

Zelle-1

a) Glasschicht aus poliertem 1.1 mm Soda-Lime-Glas von Coming
b) ITO-Schicht, 200 Angström
c) Orientierungsschicht aus Polyimid AL-1054 von JSR, 300 Angström, antiparallel gerieben
d) Flüssigkristalline Schicht (Zusammensetzung unten angegeben), 24.3 $\mu$m
e) wie c)
f) wie b)
g) wie a)

Zelle-2

Identisch aufgebaut wie Zelle-1, direkt hinter Zelle-1 angeordnet, aber um 90° gedreht gegen diese um eine Achse senkrecht durch die Schichten.

Die ITO-Schichten werden entsprechend kontaktiert, um elektrisch schaltbar zu sein.

Alternativ hierzu ist eine äquivalente Anordnung (TN-Zellen) möglich, die sich lediglich dadurch von der oben beschriebenen Anordnung unterscheidet, dass das Paar von Orientierungsschichten jeder Einzelzelle nicht antiparallel gerieben vorliegt, sondern jeweils in seiner Reiberichtung um 90° gegeneinander verdreht. Dabei liegt die Reiberichtung der zweiten Orientierungsschicht der Zelle-1 um 90° gedreht gegen die Reiberichtung der ersten, d.h. darauf folgenden Orientierungsschicht der Zelle-2 vor. Die Winkel zwischen den vier Orientierungsschichten sind also wie folgt: 90° zwischen den beiden Orientierungsschichten der Zelle-1; 90° zwischen Orientierungsschicht 2 der Zelle-1 und Orientierungsschicht 1 der Zelle-2; 90° zwischen den beiden Orientierungsschichten der Zelle-2. Die vorliegende Anordnung ist also, anders beschrieben, derart gestaltet, dass Zelle-1 und Zelle-2 jeweils nicht gegeneinander gedreht sind um eine Achse senkrecht durch die Schichten.

Die Vergleichsvorrichtungen bestehen ausschließlich aus Zelle-1, wie oben beschrieben.

**Tabelle 1:** Zusammensetzung der flüssigkristallinen Schicht und erhaltene Werte für $\tau_V$(hell), Transmissionshub und Anisotropiegrad R der Schicht

| Vorrichtung | Hostmischung | Farbstoff | Konzentration /% | Anisotropiegrad R | $\tau_V$ hell /% | Transmissions-hub /% |
|---|---|---|---|---|---|---|
| E-1 | H1 | D1<br>D2<br>D3 | 0.02<br>0.04<br>0.04 | 0.73 | 91.4 | 29.9 |
| E-2 | H1 | D1<br>D2<br>D3 | 0.03<br>0.05<br>0.06 | 0.75 | 86.4 | 36.7 |
| E-3 | H1 | D1<br>D2<br>D3 | 0.05<br>0.10<br>0.12 | 0.68 | 75.7 | 50.0 |
| E-4 | H1 | D1<br>D2<br>D3 | 0.10<br>0.21<br>0.24 | 0.74 | 55.4 | 48.9 |
| E-5 | H1 | D1<br>D2<br>D3 | 0.17<br>0.35<br>0.40 | 0.73 | 38.1 | 36.7 |
| E-6 | H1 | D1<br>D2<br>D3 | 0.35<br>0.74<br>0.84 | -0.73 | 13.8 | 13.7 |
| E-7 | H1 | D1<br>D2<br>D3 | 0.46<br>0.95<br>1.09 | -0.73 | 8.3 | 8.2 |
| E-8 | H1 | D1<br>D2<br>D3 | 0.62<br>1.29<br>1.47 | -0.73 | 3.4 | 3.3 |
| E-9 | H1 | D4<br>D5<br>D3 | 0.10<br>0.075<br>0.125 | 0.50 | 66.5 | 31.8 |
| E-10 | H1 | D4<br>D5<br>D3 | 0.20<br>0.15<br>0.25 | 0.49 | 44.9 | 32.1 |
| E-11 | H1 | D4<br>D5<br>D3 | 0.40<br>0.30<br>0.50 | 0.49 | 20.8 | 18.6 |

(fortgesetzt)

**Tabelle 1:** Zusammensetzung der flüssigkristallinen Schicht und erhaltene Werte für $\tau_V$(hell), Transmissionshub und Anisotropiegrad R der Schicht

| Vorrichtung | Hostmischung | Farbstoff | Konzentration /% | Anisotropiegrad R | $\tau_V$ hell /% | Transmissionshub /% |
|---|---|---|---|---|---|---|
| E-12 | H2 | D1<br>D2<br>D3 | 0.03<br>0.05<br>0.06 | 0.79 | 89.0 | 38.2 |
| E-13 | H2 | D1<br>D2<br>D3 | 0.05<br>0.10<br>0.12 | 0.77 | 80.9 | 54.0 |
| E-14 | H2 | D1<br>D2<br>D3 | 0.10<br>0.21<br>0.24 | 0.75 | 63.1 | 55.9 |
| E-15 | H2 | D1<br>D2<br>D3 | 0.17<br>0.35<br>0.40 | 0.77 | 47.3 | 45.9 |
| V-1 | H1 | D1<br>D2<br>D3 | 0.02<br>0.04<br>0.04 | 0.73 | 94.3 | 15.6 |
| V-2 | H1 | D1<br>D2<br>D3 | 0.03<br>0.05<br>0.06 | 0.75 | 92.9 | 20.1 |
| V-3 | H1 | D1<br>D2<br>D3 | 0.05<br>0.10<br>0.12 | 0.68 | 87.5 | 29.7 |
| V-4 | H1 | D1<br>D2<br>D3 | 0.10<br>0.21<br>0.24 | 0.74 | 74.6 | 33.3 |
| V-5 | H1 | D1<br>D2<br>D3 | 0.17<br>0.35<br>0.40 | 0.73 | 62.0 | 29.9 |
| V-6 | H1 | D1<br>D2<br>D3 | 0.35<br>0.74<br>0.84 | ~0.73 | 36.9 | 17.5 |
| V-7 | H1 | D1<br>D2<br>D3 | 0.46<br>0.95<br>1.09 | ~0.73 | 29.4 | 13.5 |
| V-8 | H1 | D1<br>D2<br>D3 | 0.62<br>1.29<br>1.47 | ~0.73 | 17.9 | 7.9 |

(fortgesetzt)

**Tabelle 1:** Zusammensetzung der flüssigkristallinen Schicht und erhaltene Werte für $\tau_V$(hell), Transmissionshub und Anisotropiegrad R der Schicht

| Vorrichtung | Hostmischung | Farbstoff | Konzentration /% | Anisotropiegrad R | $\tau_V$ hell /% | Transmissions-hub /% |
|---|---|---|---|---|---|---|
| V-9 | H1 | D4 | 0.10 | 0.50 | 82.3 | 20.2 |
| | | D5 | 0.075 | | | |
| | | D3 | 0.125 | | | |
| V-10 | H1 | D4 | 0.20 | 0.49 | 67.1 | 24.6 |
| | | D5 | 0.15 | | | |
| | | D3 | 0.25 | | | |
| V-11 | H1 | D4 | 0.40 | 0.49 | 44.3 | 20.1 |
| | | D5 | 0.30 | | | |
| | | D3 | 0.50 | | | |
| V-12 | H2 | D1 | 0.03 | 0.79 | 93.8 | 20.7 |
| | | D2 | 0.05 | | | |
| | | D3 | 0.06 | | | |
| V-13 | H2 | D1 | 0.05 | 0.77 | 89.3 | 30.2 |
| | | D2 | 0.10 | | | |
| | | D3 | 0.12 | | | |
| V-14 | H2 | D1 | 0.10 | 0.75 | 79.2 | 35.2 |
| | | D2 | 0.21 | | | |
| | | D3 | 0.24 | | | |
| V-15 | H2 | D1 | 0.17 | 0.77 | 68.0 | 32.5 |
| | | D2 | 0.35 | | | |
| | | D3 | 0.40 | | | |

Die erhaltenen Ergebnisse zeigen, dass mit den erfindungsgemäßen Vorrichtungen (E-1, E-2, E-4 bis E-8, und E12 bis E-15) in allen Fällen deutlich bessere Werte für den Transmissionshub erhalten werden bei gleicher Helltransmission, als mit Vorrichtungen, welche nur eine einzige Guest-Host-Schicht enthalten (V-1 bis V-15).

Beispielsweise kann mit der erfindungsgemäßen Vorrichtung E-13 eine hervorragende Helltransmission (75.7% bzw. 80.9%) verbunden mit einem hohen Hub erzielt werden (50.0% bzw. 54.0%). Derartige Werte sind mit den Vergleichsvorrichtungen nicht erzielbar, wie das Beispiel V-4 mit dem größten Transmissionshub aller Vergleichsbeispiele zeigt. Bei V-4 ist die Helltransmission ähnlich wie bei E-3, der Hub jedoch deutlich niedriger (33.3%).

Auch bei sehr hohen Helltransmissionen sind die erreichten Hübe mit den erfindungsgemäßen Vorrichtungen größer als mit den Vergleichsvorrichtungen, wie die Beispiele E-2 und E-12 zeigen (36.7 und 38.2% Hub), verglichen mit V-3, V-9 und V-13, die lediglich Hübe zwischen 20 und 30% aufweisen.

Besonders hervorragende Werte für den Transmissionshub werden erzielt, wenn die flüssigkristalline Schicht einen hohen Anisotropiegrad aufweist. Die Kombination von hohem Anisotropiegrad der Schaltschicht und der Verwendung von zwei Schaltschichten weist einen Effekt auf, der deutlich über die Summe der Einzeleffekte herausgeht. Ein Vergleich der Vorrichtungen V-10 und V-15 zeigt, dass durch eine erhöhte Anisotropie allein (0.49 für V-10 verglichen mit 0.77 für V-15) lediglich eine Erhöhung des Transmissionshubs von 24.6 auf 32.5% erzielt wird. Durch einen Wechsel von Einzelschaltschicht auf erfindungsgemäße Doppelschaltschicht wird für Vorrichtung E-10/V-10 lediglich eine Erhöhung in einem ähnlichen Umfang erzielt. Hingegen steigt der Transmissionshub von 24.6% auf 45.9%, d.h. verdoppelt sich fast, wenn sowohl ein hoher Anisotropiegrad als auch eine erfindungsgemäße Doppelschicht verwendet wird (V-10 verglichen mit E-15).

Ein weiteres überraschendes Ergebnis der Untersuchungen ist, dass auch mit hohen Helltransmissionen (größer als 45%, bevorzugt größer als 55%, besonders bevorzugt größer als 65%), wie die Beispiele E-1, E-2, E-4, und E-12 bis E-15 zeigen, gute Ergebnisse für den Transmissionshub erzielt werden können, wenn erfindungsgemäß zwei Schaltschichten verwendet werden. Eine Kombination von hoher Helltransmission und großem Transmissionshub ist bislang für Schaltvorrichtungen zur Regulierung des Energie-Durchtritts auf Basis von Guest-Host-Zellen nicht berichtet worden. Die Kombination dieser beiden Eigenschaften ist jedoch für die Verwendung der Vorrichtungen als schaltbare Fenster von hohem Interesse.

B) Zusammensetzung der flüssigkristallinen Mischungen und Strukturen der verwendeten Farbstoffe

| **Tabelle 2:** Zusammensetzung der Hostmischungen | | | | |
|---|---|---|---|---|
| Hostmischunqen | H1 | | H2 | |
| Klärpunkt | 77.5 °C | | 114.5 °C | |
| Dielektrische Anisotropie $\Delta\varepsilon$ | 11.3 | | 10.5 | |
| Optische Anisotropie $\Delta n$ | 0.1255 | | 0.1342 | |
| Zusammensetzung | Verbindung | % | Verbindung | % |
| | PZG-2-N | 0.936 | CPG-3-F | 5 |
| | PZG-3-N | 0.936 | CPG-5-F | 5 |
| | PZG-4-N | 2.184 | CPU-3-F | 15 |
| | PZG-5-N | 2.184 | CPU-5-F | 15 |
| | CP-3-O1 | 7.488 | CP-3-N | 16 |
| | CC-3-4 | 3.12 | CP-5-N | 16 |
| | CPP-3-2 | 2.496 | CCGU-3-F | 7 |
| | CCZGI-3-3 | 2.496 | CGPC-3-3 | 4 |
| | CCZGI-3-5 | 2.496 | CGPC-5-3 | 4 |
| | CCZPC-3-3 | 1.248 | CGPC-5-5 | 4 |
| | CCZPC-3-4 | 1.248 | CCZPC-3-3 | 3 |
| | CCZPC-3-5 | 0.936 | CCZPC-3-4 | 3 |
| | CPZG-3-N | 1.248 | CCZPC-3-5 | 3 |
| | CGPC-5-3 | 1.248 | | |
| | CPPC-5-3 | 0.936 | | |
| | CPU-3-F | 34.4 | | |
| | CPU-5-F | 34.4 | | |

| **Tabelle 3**: Strukturen der verwendeten Farbstoffe |
|---|
| 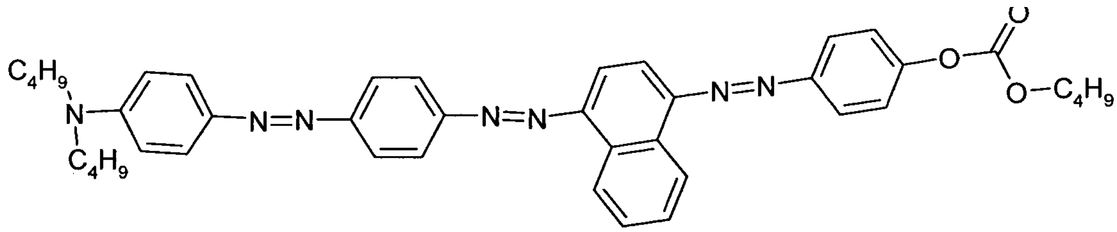 |
| D1 |

(fortgesetzt)

| **Tabelle 3**: Strukturen der verwendeten Farbstoffe |
| --- |
| 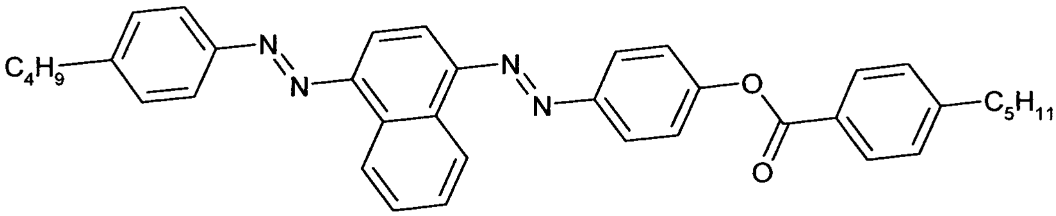 |
| D2 |
| 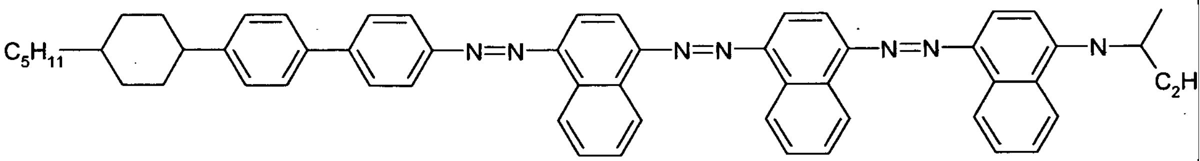 |
| D3 |
| 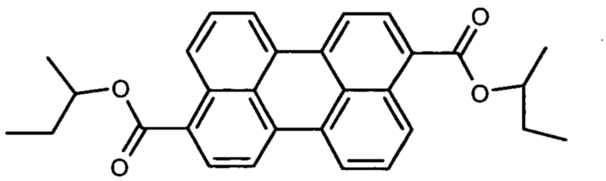 |
| D4 |
| D5: von BASF SE kommerziell erhältlicher Farbstoff Lumogen 305 |

C) Verwendete Verfahren zur Bestimmung der Parameter $\tau_{v\ hell}$ (Lichttransmissionsgrad des Hellzustands), Transmissionshub und Anisotropiegrad R

1) Der Lichttransmissionsgrad des Hellzustands $\tau_{v\ hell}$ wird in Prozent angegeben. Er wird berechnet aus den spektralen Transmissionsgraden des Hellzustands der Vorrichtung (Vorrichtung enthaltend zwei Einheiten aus je zwei Glasscheiben mit Orientierungsschichten und dazwischen angeordnetem flüssigkristallinen Medium mit dichroitischen Farbstoffen), bezogen auf eine ansonsten gleiche Vorrichtung ohne Farbstoff im flüssigkristallinen Medium als Referenz. Die spektralen Transmissionsgrade werden dabei mit einem UV-Spektrometer, Modell Lambda 1050, der Firma Perkin Elmer gemessen.
Es kann dabei auch gegen Luft als Referenz gemessen werden. Dabei werden reduzierte Werte für die Lichttransmissionsgrade hell und dunkel erhalten. Die qualitativen Effekte der vorliegenden Erfindung sind dabei jedoch unverändert.
Die Berechnung des Lichttransmissionsgrads $\tau_{v\ hell}$ erfolgt gemäß der Europäischen Norm EN410, Gleichung (1) (Bestimmung der lichttechnischen und strahlungsphysikalischen Kenngrößen von Verglasungen). Der Lichttransmissionsgrad $\tau_{v\ hell}$ gemäß dieser Norm berücksichtigt die relative spektrale Verteilung der Normlichtart und den spektralen Hellempfindlichkeitsgrad des Normalbeobachters.

2) Der Transmissionshub wird in Prozent angegeben. Er stellt die Differenz zwischen dem Lichttransmissionsgrad der Schaltschicht im Hellzustand der Vorrichtung ($\tau_{v\ hell}$) und dem Lichttransmissionsgrad der Schaltschicht im Dunkelzustand der Vorrichtung ($\tau_{v\ dunkel}$) dar. Der Wert $\tau_{v\ dunkel}$ dunkel wird dabei entsprechend dem oben angegebenen Verfahren zur Messung von $\tau_{v\ hell}$ ermittelt, während die Vorrichtung in den Dunkelzustand geschaltet ist.

3) Der Anisotropiegrad R einer Schaltschicht wird bei 550 nm ermittelt aus dem Wert für die Extinktion einer Vorrichtung enthaltend zwei Glasscheiben mit Orientierungsschichten und dazwischen angeordnetes flüssigkristallines Medium mit dichroitischen Farbstoffen bei paralleler Ausrichtung der Farbstoffmoleküle E(p) und dem Wert für die

Extinktion derselben Vorrichtung bei senkrechter Ausrichtung der Farbstoffmoleküle E(s). Parallele Ausrichtung der Farbstoffmoleküle wird durch eine Orientierungsschicht erreicht. Die Extinktion der Vorrichtung wird gegen eine Vorrichtung, die keinen Farbstoff enthält, aber ansonsten gleich aufgebaut ist, gemessen. Die Messung erfolgt mit polarisiertem Licht, dessen Schwingungsebene einmal parallel zur Orientierungsrichtung schwingt (E(p)) und in einer Folgemessung senkrecht zur Orientierungsrichtung schwingt (E(s)). Die Probe wird dabei nicht geschaltet oder gedreht. Die Messung von E(p) und E(s) erfolgt also über die Drehung der Schwingungsebene des eingestrahlten polarisierten Lichts.

Im Einzelnen wird dabei wie folgt beschrieben vorgegangen: Die Spektren zur Messung von E(s) und E(p) werden mit einem UV-Spektrometer, Modell Lambda 1050, der Firma Perkin Elmer aufgenommen. Das Spektrometer ist mit je einem Glan-Thompson-Polarisator für den Wellenlängenbereich von 250 nm - 2500 nm im Mess- und Referenzstrahl ausgestattet. Die beiden Polarisatoren werden von einem Schrittmotor angesteuert und sind in gleicher Richtung ausgerichtet. Eine Veränderung der Polarisatorrichtung des Polarisators, z.B. Umstellen von 0° auf 90°, wird immer synchron und gleichgerichtet für Mess- und Referenzstrahl ausgeführt. Die Ausrichtung eines einzelnen Polarisators kann mit einem Verfahren ermittelt werden, das in der Dissertation von T. Karstens, Universität Würzburg, 1973, beschrieben ist. Hierbei wird der Polarisator in 5°-Schritten gegen eine ausgerichtete dichroitische Probe gedreht und die Extinktion bei einer festen Wellenlänge, bevorzugt im Bereich maximaler Absorption, aufgenommen. Es wird für jede Polarisatorstellung eine neue Nulllinie gefahren.

Zur Messung der beiden dichroitischen Spektren E(p) und E(s) befinden sich im Mess- und Referenzstrahl jeweils eine antiparallel geriebene Testzelle, beschichtet mit Polyimid AL-1054 der Firma JSR. Die beiden Testzellen sind von gleicher Schichtdicke auszuwählen, typischerweise 15 - 25 $\mu$m. Im Referenzstrahl befindet sich die Testzelle mit reinem flüssigkristallinen Medium. Im Messstrahl befindet sich die Testzelle mit der Lösung aus dichroitischem Farbstoff im flüssigkristallinen Medium. Die beiden Testzellen für Mess- und Referenzstrahl werden in gleicher Orientierungsrichtung in den Strahlengang montiert. Um größtmögliche Genauigkeit des Spektrometers zu gewährleisten, wird darauf geachtet, dass E(p) im Wellenlängenbereich seiner stärksten Absorption vorzugsweise zwischen 0.5 und 1.5 liegt. Dies korrespondiert mit Transmissionen von 30% - 5%. Dies wird durch entsprechende Anpassungen der Schichtdicke und/oder Farbstoffkonzentration eingestellt.

Der Anisotropiegrad R wird aus den gemessenen Werten für E(p) und E(s) nach der Formel

$$R = [E(p)-E(s)] / [E(p) + 2*E(s)]$$

berechnet, wie unter anderem in "Polarized Light in Optics and Spectroscopy", D. S. Kliger et al., Academic Press, 1990, angegeben.

## Patentansprüche

1. Vorrichtung zur Regulierung des Energie-Durchtritts durch eine Fläche, wobei die Vorrichtung mindestens zwei Schaltschichten S(1) und S(2) enthält, die jeweils ein flüssigkristallines Medium enthaltend eine oder mehrere dichroitische Verbindungen enthalten, und wobei die Vorrichtung die Orientierungsschichten O(1), O(2), O(3) und O(4) enthält, wobei die genannten Schaltschichten und Orientierungsschichten in zueinander parallelen Ebenen in der Folge O(1), S(1), O(2), O(3), S(2), O(4) in der Vorrichtung vorliegen, wobei in mindestens einem Schaltzustand der Vorrichtung eine Orientierungsachse OA(1)* der Moleküle des flüssigkristallinen Mediums von S(1), die an O(2) angrenzen, vorliegt, und eine Orientierungsachse OA(2)* der Moleküle des flüssigkristallinen Mediums von S(2), die an O(3) angrenzen, vorliegt, und die Orientierungsachsen OA(1)* und OA(2)* nicht zueinander parallel sind und parallel zur Ebene der Schaltschichten liegen,
   **dadurch gekennzeichnet, dass**
   die Schaltschichten S(1) und S(2) einen Anisotropiegrad R von 0,7 bis 0,9 aufweisen, wobei das flüssigkristalline Medium jeweils einen Klärpunkt im Temperaturbereich von 70 °C bis 170 °C hat, und wobei die Vorrichtung in einer Öffnung eines Gebäudes, eines Containers, eines Fahrzeugs oder eines sonstigen weitgehend geschlossenen Raums angebracht ist.

2. Vorrichtung nach Anspruch 1, **dadurch gekennzeichnet, dass** sie elektrisch schaltbar ist.

3. Vorrichtung nach Anspruch 1 oder 2, **dadurch gekennzeichnet, dass** sie vier Elektroden aufweist, von denen jeweils eine an jeder Seite der zwei Schaltschichten angebracht ist.

4. Vorrichtung nach einem oder mehreren der Ansprüche 1 bis 3, **dadurch gekennzeichnet, dass** die Schaltschichten getrennt elektrisch schaltbar sind.

5. Vorrichtung nach einem oder mehreren der Ansprüche 1 bis 4, **dadurch gekennzeichnet, dass** durch Anlegen eines elektrischen Feldes eine Ausrichtung der Moleküle des flüssigkristallinen Mediums vertikal zur Ebene der Schaltschichten erfolgt.

6. Vorrichtung nach einem oder mehreren der Ansprüche 1 bis 5, **dadurch gekennzeichnet, dass** entweder beide Schaltschichten S(1) und S(2) im spannungslosen Schaltzustand eine planare Ausrichtung der Moleküle des flüssigkristallinen Mediums aufweisen, oder dass beide Schaltschichten S(1) und S(2) im spannungslosen Schaltzustand eine homeotrope Ausrichtung der Moleküle des flüssigkristallinen Mediums aufweisen.

7. Vorrichtung nach einem oder mehreren der Ansprüche 1 bis 5, **dadurch gekennzeichnet, dass** eine der beiden Schaltschichten S(1) und S(2) im spannungslosen Schaltzustand eine homeotrope Ausrichtung der Moleküle des flüssigkristallinen Mediums aufweist, und die andere der beiden Schaltschichten S(1) und S(2) im spannungslosen Schaltzustand eine planare Ausrichtung der Moleküle des flüssigkristallinen Mediums aufweist.

8. Vorrichtung nach einem oder mehreren der Ansprüche 1 bis 7, **dadurch gekennzeichnet, dass** sie eine Vorrichtung zur Umwandlung von Lichtenergie in elektrische Energie aufweist, bevorzugt eine Solarzelle.

9. Vorrichtung nach einem oder mehreren der Ansprüche 1 bis 8, **dadurch gekennzeichnet, dass** sie einen Schichtaufbau in der folgenden Reihenfolge aufweist, wobei die Schichten bevorzugt unmittelbar aneinander angrenzen:

   - Substratschicht, bevorzugt aus Glas oder Polymer
   - elektrisch leitfähige transparente Schicht, bevorzugt ITO-Schicht
   - Orientierungsschicht O(1)
   - Schaltschicht S(1)
   - Orientierungsschicht O(2)
   - elektrisch leitfähige transparente Schicht, bevorzugt ITO-Schicht
   - Substratschicht(en), bevorzugt aus Glas oder Polymer
   - elektrisch leitfähige transparente Schicht, bevorzugt ITO-Schicht
   - Orientierungsschicht O(3)
   - Schaltschicht S(2)
   - Orientierungsschicht O(4)
   - elektrisch leitfähige transparente Schicht, bevorzugt ITO-Schicht
   - Substratschicht, bevorzugt aus Glas oder Polymer.

10. Vorrichtung nach einem oder mehreren der Ansprüche 1 bis 9, **dadurch gekennzeichnet, dass** die Orientierungsachsen OA(1)* und OA(2)* einen Winkel von 50-90°, bevorzugt einen Winkel von 70-90°, und besonders bevorzugt einen Winkel von 85-90° zueinander bilden.

11. Vorrichtung nach einem oder mehreren der Ansprüche 1 bis 10, **dadurch gekennzeichnet, dass** der mindestens eine Schaltzustand der Vorrichtung, in dem die Orientierungsachsen OA(1)* und OA(2)* nicht zueinander parallel sind und parallel zur Ebene der Schaltschichten liegen, in einem spannungslosen Schaltzustand der Vorrichtung vorliegt.

12. Vorrichtung nach einem oder mehreren der Ansprüche 1 bis 11, **dadurch gekennzeichnet, dass** die Orientierungsschichten O(2) und O(3) derart gestaltet sind, dass sie jeweils unterschiedliche Orientierungsachsen der Moleküle des flüssigkristallinen Mediums bewirken, welches an die Orientierungsschicht angrenzt.

13. Vorrichtung nach einem oder mehreren der Ansprüche 1 bis 12, **dadurch gekennzeichnet, dass** die Schichten O(2) und O(3) im spannungslosen Schaltzustand eine planare Ausrichtung der Moleküle des flüssigkristallinen Mediums bewirken.

14. Vorrichtung nach einem oder mehreren der Ansprüche 1 bis 13, **dadurch gekennzeichnet, dass** entweder beide Orientierungsschichten O(1) und O(2) eine planare Ausrichtung der Moleküle des flüssigkristallinen Mediums bewirken, oder dass beide Orientierungsschichten O(1) und O(2) eine homeotrope Ausrichtung der Moleküle des flüssigkristallinen Mediums bewirken.

15. Vorrichtung nach einem oder mehreren der Ansprüche 1 bis 14, **dadurch gekennzeichnet, dass** die Schaltschichten S(1) und S(2) einen Anisotropiegrad R von 0,7 bis 0,85, bevorzugt von 0,75 bis 0,8 aufweisen.

16. Vorrichtung nach Anspruch 15, **dadurch gekennzeichnet, dass** mindestens eine der dichroitischen Verbindungen gewählt ist aus Azoverbindungen, Anthrachinonen, Methinverbindungen, Azomethinverbindungen, Merocyaninverbindungen, Naphthochinonen, Tetrazinen, Perylenen, Terrylenen, Quaterrylenen, höheren Rylenen, Benzothiadiazolen, Diketopyrrolopyrrolen, Squarainen, und Pyrromethenen.

17. Vorrichtung nach einem oder mehreren der Ansprüche 1 bis 16, **dadurch gekennzeichnet, dass** sie keinen Polarisator umfasst.

18. Verwendung einer Vorrichtung nach einem oder mehreren der Ansprüche 1 bis 17 zur Regulierung des Energie-Durchtritts durch eine weitgehend energiedurchlässige Fläche in einen Innenraum, bevorzugt des Durchtritts von Energie in Form von Sonnenlicht.

19. Fenster, **dadurch gekennzeichnet, dass** es eine Vorrichtung nach einem oder mehreren der Ansprüche 1 bis 17 umfasst.

## Claims

1. Device for regulating the passage of energy through a surface, where the device comprises at least two switching layers S(1) and S(2), each of which comprises a liquid-crystalline medium comprising one or more dichroic compounds, and where the device comprises orientation layers O(1), O(2), O(3) and O(4), where the said switching layers and orientation layers are present in the device in mutually parallel planes in the sequence O(1), S(1), O(2), O(3), S(2), O(4), where, in at least one switching state of the device, an orientation axis OA(1)* of the molecules of the liquid-crystalline medium of S(1) which are adjacent to O(2) is present, and an orientation axis OA(2)* of the molecules of the liquid-crystalline medium of S(2) which are adjacent to O(3) is present, and the orientation axes OA(1)* and OA(2)* are not parallel to one another and are parallel to the plane of the switching layers, **characterised in that** the switching layers S(1) and S(2) have a degree of anisotropy R of 0.7 to 0.9, where the liquid-crystalline medium in each case has a clearing point in the temperature range from 70°C to 170°C, and where the device is installed in an opening of a building, a container, a vehicle or another substantially closed space.

2. Device according to Claim 1, **characterised in that** it is electrically switchable.

3. Device according to Claim 1 or 2, **characterised in that** it has four electrodes, one of which is installed on each side of each of the two switching layers.

4. Device according to one or more of Claims 1 to 3, **characterised in that** the switching layers are separately electrically switchable.

5. Device according to one or more of Claims 1 to 4, **characterised in that** the molecules of the liquid-crystalline medium are aligned vertically to the plane of the switching layers by application of an electric field.

6. Device according to one or more of Claims 1 to 5, **characterised in that** either both switching layers S(1) and S(2) in the voltage-free switching state have a planar alignment of the molecules of the liquid-crystalline medium, or **in that** both switching layers S(1) and S(2) in the voltage-free switching state have a homeotropic alignment of the molecules of the liquid-crystalline medium.

7. Device according to one or more of Claims 1 to 5, **characterised in that** one of the two switching layers S(1) and S(2) in the voltage-free switching state has a homeotropic alignment of the molecules of the liquid-crystalline medium, and the other of the two switching layers S(1) and S(2) in the voltage-free switching state has a planar alignment of the molecules of the liquid-crystalline medium.

8. Device according to one or more of Claims 1 to 7, **characterised in that** it has a device for the conversion of light energy into electrical energy, preferably a solar cell.

9. Device according to one or more of Claims 1 to 8, **characterised in that** it has a layer structure in the following

sequence, where the layers are preferably directly adjacent to one another:

- substrate layer, preferably comprising glass or polymer
- electrically conductive transparent layer, preferably ITO layer
- orientation layer O(1)
- switching layer S(1)
- orientation layer O(2)
- electrically conductive transparent layer, preferably ITO layer
- substrate layer(s), preferably comprising glass or polymer
- electrically conductive transparent layer, preferably ITO layer
- orientation layer O(3)
- switching layer S(2)
- orientation layer O(4)
- electrically conductive transparent layer, preferably ITO layer
- substrate layer, preferably comprising glass or polymer.

**10.** Device according to one or more of Claims 1 to 9, **characterised in that** orientation axes OA(1)* and OA(2)* form an angle of 50-90°, preferably an angle of 70-90°, and particularly preferably an angle of 85-90° to one another.

**11.** Device according to one or more of Claims 1 to 10, **characterised in that** the at least one switching state of the device in which orientation axes OA(1)* and OA(2)* are not parallel to one another and are parallel to the plane of the switching layers is present in a voltage-free switching state of the device.

**12.** Device according to one or more of Claims 1 to 11, **characterised in that** orientation layers O(2) and O(3) are configured in such a way that they each bring about different orientation axes of the molecules of the liquid-crystalline medium which is adjacent to the orientation layer.

**13.** Device according to one or more of Claims 1 to 12, **characterised in that** layers O(2) and O(3) in the voltage-free switching state bring about a planar alignment of the molecules of the liquid-crystalline medium.

**14.** Device according to one or more of Claims 1 to 13, **characterised in that** either both orientation layers O(1) and O(2) bring about a planar alignment of the molecules of the liquid-crystalline medium, or **in that** both orientation layers O(1) and O(2) bring about a homeotropic alignment of the molecules of the liquid-crystalline medium.

**15.** Device according to one or more of Claims 1 to 14, **characterised in that** switching layers S(1) and S(2) have a degree of anisotropy R of 0.7 to 0.85, preferably 0.75 to 0.8.

**16.** Device according to Claim 15, **characterised in that** at least one of the dichroic compounds is selected from azo compounds, anthraquinones, methine compounds, azomethine compounds, merocyanine compounds, naphthoquinones, tetrazines, perylenes, terrylenes, quaterrylenes, higher rylenes, benzothiadiazoles, diketopyrrolo-pyrroles, squaraines and pyrromethenes.

**17.** Device according to one or more of Claims 1 to 16, **characterised in that** it does not contain a polariser.

**18.** Use of a device according to one or more of Claims 1 to 17 for regulating the passage of energy through a substantially energy-transmitting surface into an interior space, preferably the passage of energy in the form of sunlight.

**19.** Window, **characterised in that** it contains a device according to one or more of Claims 1 to 17.

## Revendications

**1.** Dispositif pour réguler le passage de l'énergie au travers d'une surface, dans lequel le dispositif comprend au moins deux couches de commutation S(1) et S(2) dont chacune comprend un milieu cristallin liquide qui comprend un ou plusieurs composé(s) dichroïque(s), et dans lequel le dispositif comprend des couches d'orientation O(1), O(2), O(3) et O(4), dans lequel lesdites couches de commutation et lesdites couches d'orientation sont présentes dans le dispositif dans des plans mutuellement parallèles selon la séquence O(1), S(1), O(2), O(3), S(2), O(4),
dans lequel, dans au moins un état de commutation du dispositif, un axe d'orientation OA(1)* des molécules du

milieu cristallin liquide de S(1) qui sont adjacentes à O(2) est présent, et un axe d'orientation OA(2)* des molécules du milieu cristallin liquide de S(2) qui sont adjacentes à O(3) est présent, et les axes d'orientation OA(1)* et OA(2)* ne sont pas parallèles l'un à l'autre et sont parallèles au plan des couches de commutation, **caractérisé en ce que** les couches de commutation S(1) et S(2) présentent un degré d'anisotropie R de 0,7 à 0,9, dans lequel le milieu cristallin liquide, dans chaque cas, présente un point de clarification dans la plage de températures qui va de 70°C à 170°C, et dans lequel le dispositif est installé dans une ouverture d'un bâtiment, d'un conteneur, d'un véhicule ou d'un autre espace sensiblement fermé.

**2.** Dispositif selon la revendication 1, **caractérisé en ce qu'**il peut être commuté électriquement.

**3.** Dispositif selon la revendication 1 ou 2, **caractérisé en ce qu'**il comporte quatre électrodes dont chacune est installée sur chaque côté de chacune des deux couches de commutation.

**4.** Dispositif selon une ou plusieurs des revendications 1 à 3, **caractérisé en ce que** les couches de commutation peuvent être commutées électriquement de façon séparée.

**5.** Dispositif selon une ou plusieurs des revendications 1 à 4, **caractérisé en ce que** les molécules du milieu cristallin liquide sont alignées verticalement par rapport au plan des couches de commutation au moyen de l'application d'un champ électrique.

**6.** Dispositif selon une ou plusieurs des revendications 1 à 5, **caractérisé en ce que** soit les couches de commutation S(1) et S(2) dans l'état de commutation exempt de tension présentent toutes les deux un alignement plan des molécules du milieu cristallin liquide, soit les couches de commutation S(1) et S(2) dans l'état de commutation exempt de tension présentent toutes les deux un alignement homéotrope des molécules du milieu cristallin liquide.

**7.** Dispositif selon une ou plusieurs des revendications 1 à 5, **caractérisé en ce que** l'une des deux couches de commutation S(1) et S(2) dans l'état de commutation exempt de tension présente un alignement homéotrope des molécules du milieu cristallin liquide et l'autre des deux couches de commutation S(1) et S(2) dans l'état de commutation exempt de tension présente un alignement plan des molécules du milieu cristallin liquide.

**8.** Dispositif selon une ou plusieurs des revendications 1 à 7, **caractérisé en ce qu'**il comporte un dispositif pour la conversion de l'énergie lumineuse en énergie électrique, de préférence une cellule solaire.

**9.** Dispositif selon une ou plusieurs des revendications 1 à 8, **caractérisé en ce qu'**il présente une structure de couches selon la séquence qui suit, structure selon laquelle les couches sont de préférence directement adjacentes les unes aux autres :

- une couche de substrat, comprenant de préférence du verre ou un polymère ;
- une couche transparente électriquement conductrice, de préférence une couche en ITO ;
- une couche d'orientation O(1) ;
- une couche de commutation S(1) ;
- une couche d'orientation O(2) ;
- une couche transparente électriquement conductrice, de préférence une couche en ITO ;
- une/des couche(s) de substrat, de préférence comprenant du verre ou un polymère ;
- une couche transparente électriquement conductrice, de préférence une couche en ITO ;
- une couche d'orientation O(3) ;
- une couche de commutation S(2) ;
- une couche d'orientation O(4) ;
- une couche transparente électriquement conductrice, de préférence une couche en ITO ; et
- une couche de substrat, de préférence comprenant du verre ou un polymère.

**10.** Dispositif selon une ou plusieurs des revendications 1 à 9, **caractérisé en ce que** les axes d'orientation OA(1)* et OA(2)* forment un angle de 50-90°, de préférence un angle de 70-90°, et de façon particulièrement préférable, un angle de 85-90° l'un par rapport à l'autre.

**11.** Dispositif selon une ou plusieurs des revendications 1 à 10, **caractérisé en ce que** l'au moins un état de commutation du dispositif dans lequel les axes d'orientation OA(1)* et OA(2)* ne sont pas parallèles l'un à l'autre et sont parallèles au plan des couches de commutation est présent dans un état de commutation exempt de tension du dispositif.

**12.** Dispositif selon une ou plusieurs des revendications 1 à 11, **caractérisé en ce que** les couches d'orientation O(2) et O(3) sont configurées de telle sorte qu'elles conduisent chacune à des axes d'orientation différents des molécules du milieu cristallin liquide qui est adjacent à la couche d'orientation.

**13.** Dispositif selon une ou plusieurs des revendications 1 à 12, **caractérisé en ce que** les couches O(2) et O(3) dans l'état de commutation exempt de tension conduisent à un alignement plan des molécules du milieu cristallin liquide.

**14.** Dispositif selon une ou plusieurs des revendications 1 à 13, **caractérisé en ce que** soit les couches d'orientation O(1) et O(2) conduisent toutes les deux à un alignement plan des molécules du milieu cristallin liquide, soit les couches de commutation O(1) et O(2) conduisent toutes les deux à un alignement homéotrope des molécules du milieu cristallin liquide.

**15.** Dispositif selon une ou plusieurs des revendications 1 à 14, **caractérisé en ce que** les couches de commutation S(1) et S(2) présentent un degré d'anisotropie R de 0,7 à 0,85, de préférence de 0,75 à 0,8.

**16.** Dispositif selon la revendication 15, **caractérisé en ce qu'**au moins l'un des composés dichroïques est sélectionné parmi les composés azo, les anthraquinones, les composés de méthine, les composés d'azométhine, les composés de mérocyanine, les naphtoquinones, les tétrazines, les pérylènes, les terrylènes, les quaterrylènes, les rylènes supérieurs, les benzothiadiazoles, les dicétopyrrolopyrroles, les squaraines et les pyrrométhènes.

**17.** Dispositif selon une ou plusieurs des revendications 1 à 16, **caractérisé en ce qu'**il ne contient pas de polariseur.

**18.** Utilisation d'un dispositif selon une ou plusieurs des revendications 1 à 17 pour réguler le passage de l'énergie au travers d'une surface transmettant sensiblement l'énergie à l'intérieur d'un espace intérieur, de préférence le passage de l'énergie sous la forme de lumière solaire.

**19.** Fenêtre, **caractérisée en ce qu'**elle contient un dispositif selon une ou plusieurs des revendications 1 à 17.

Fig. 1

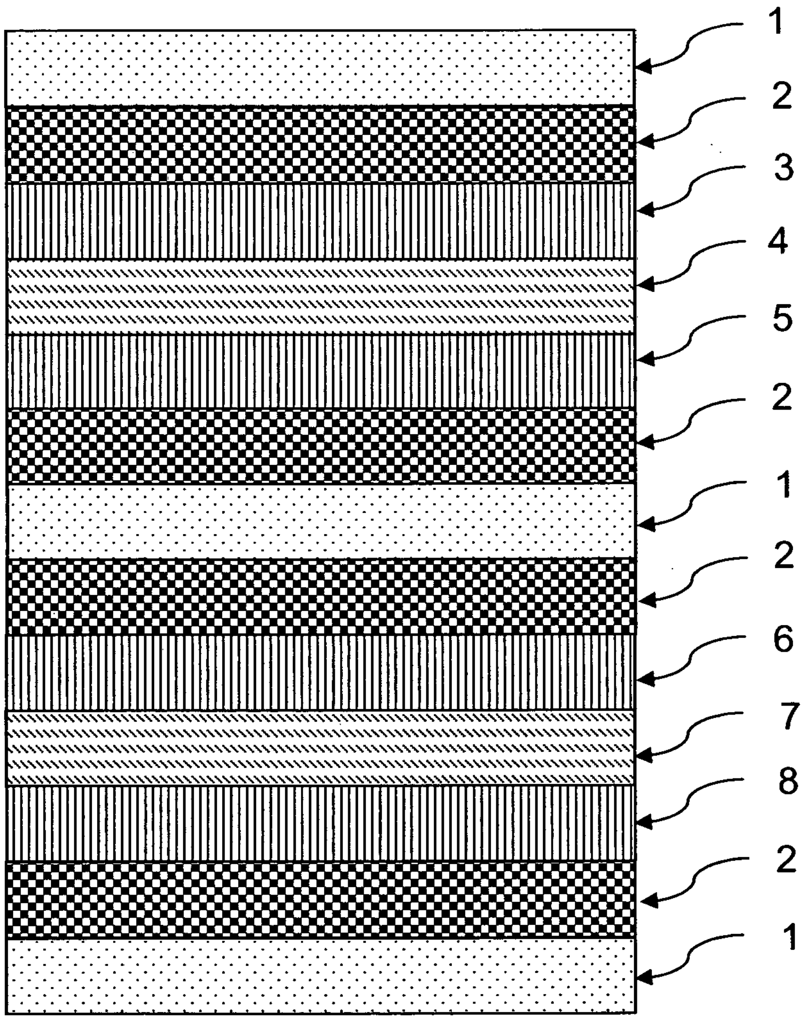

Fig. 2

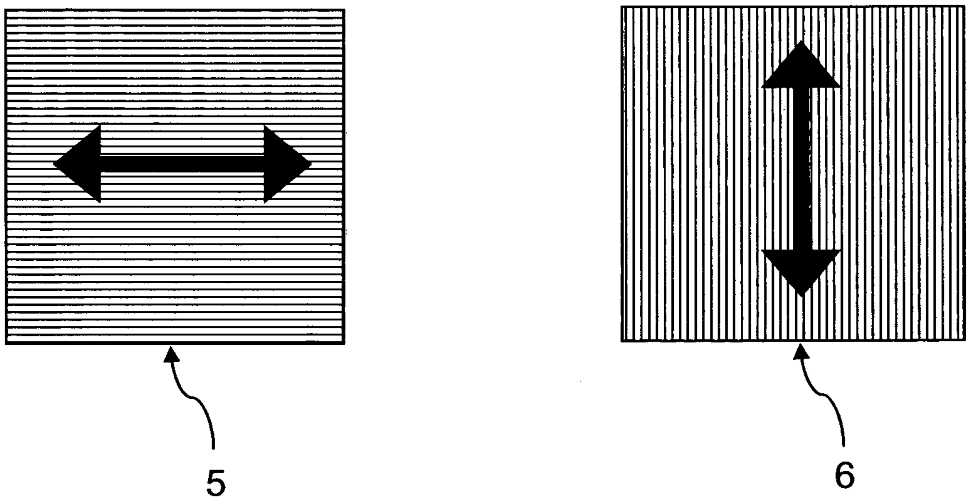


Fig. 3

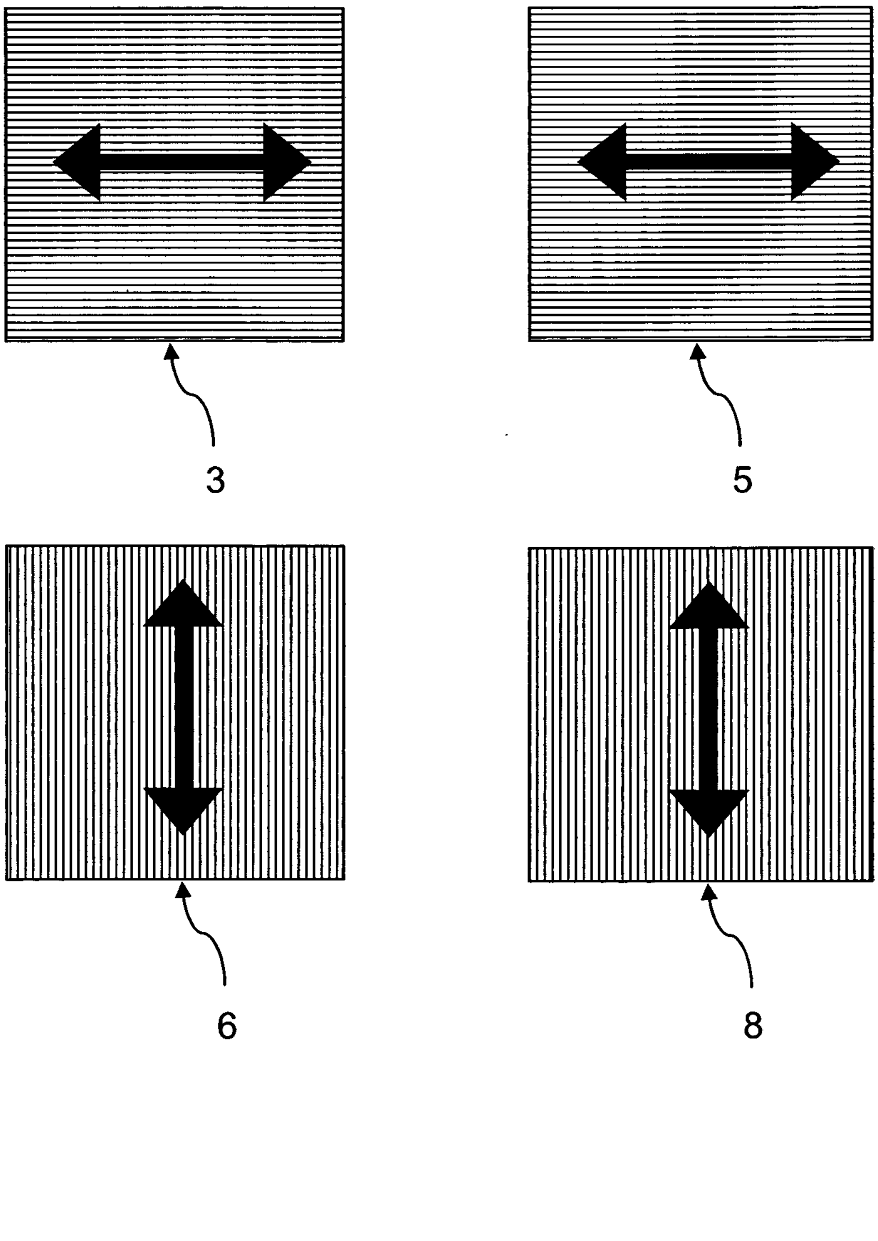

Fig. 4

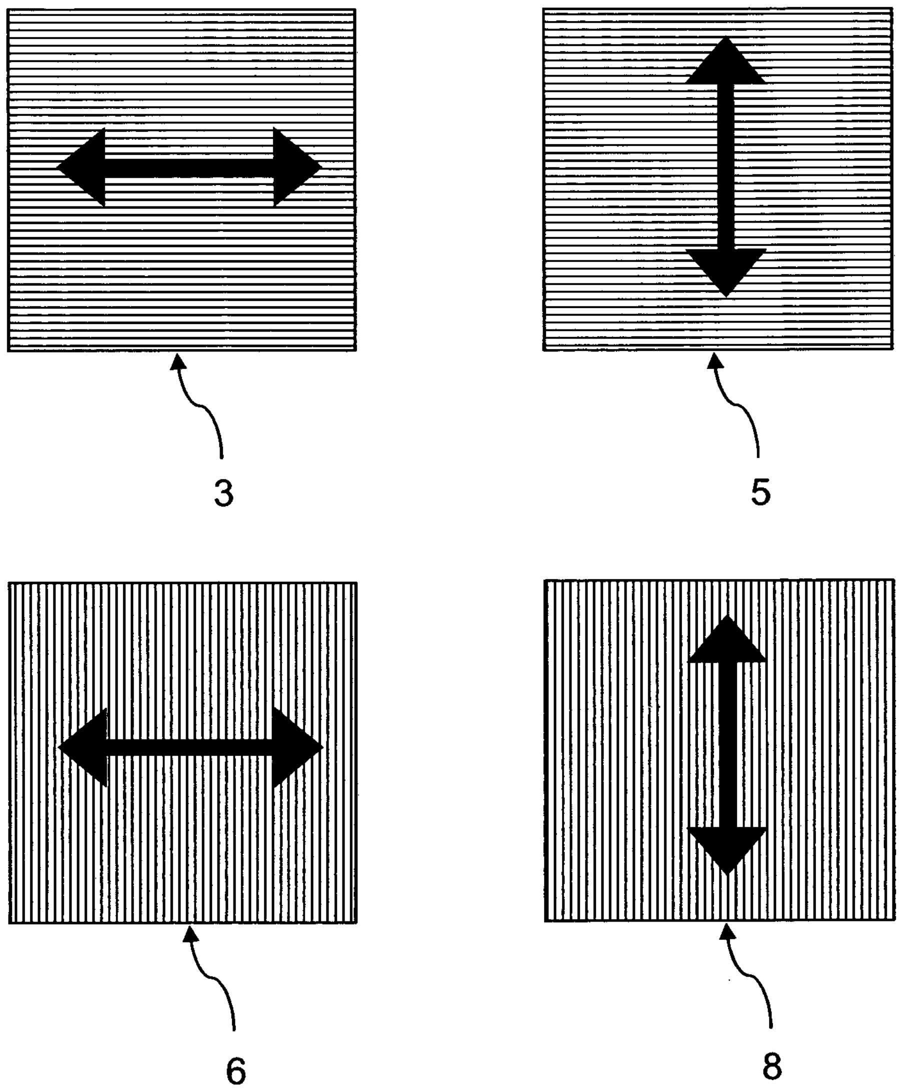

3

5

6

8

Fig. 5

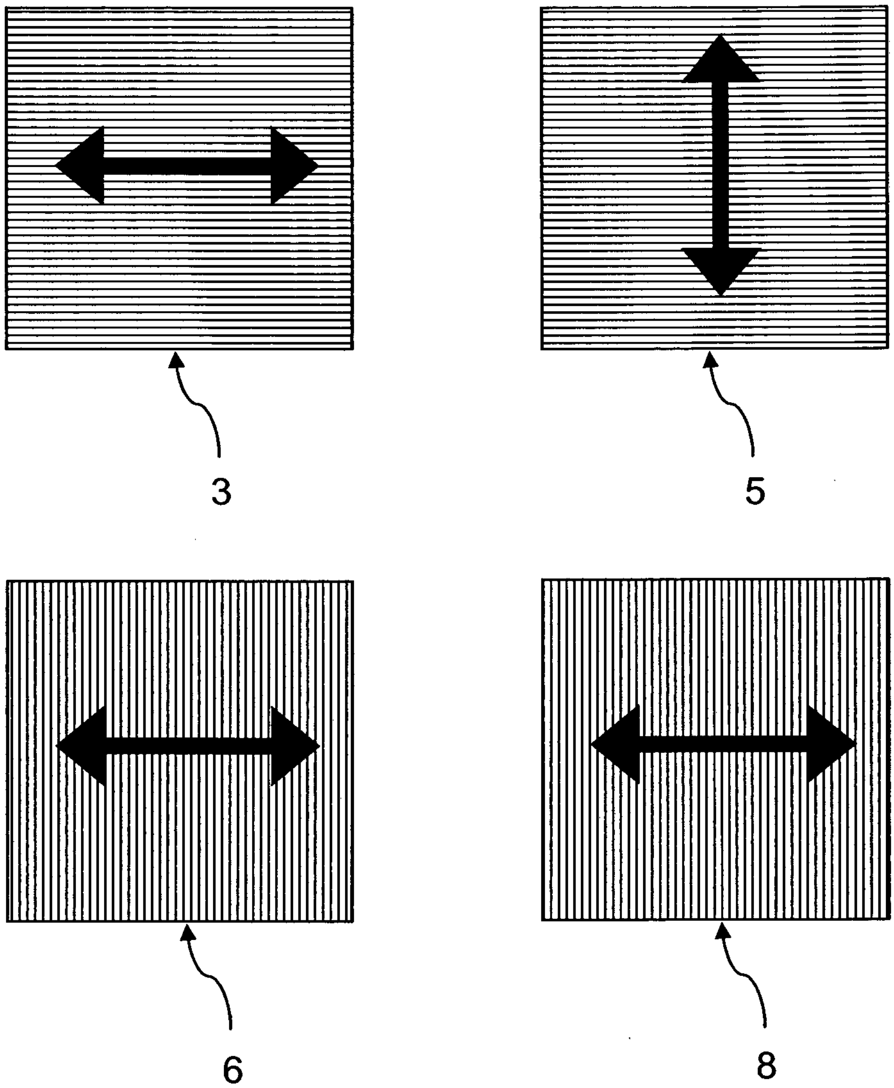

Fig. 6

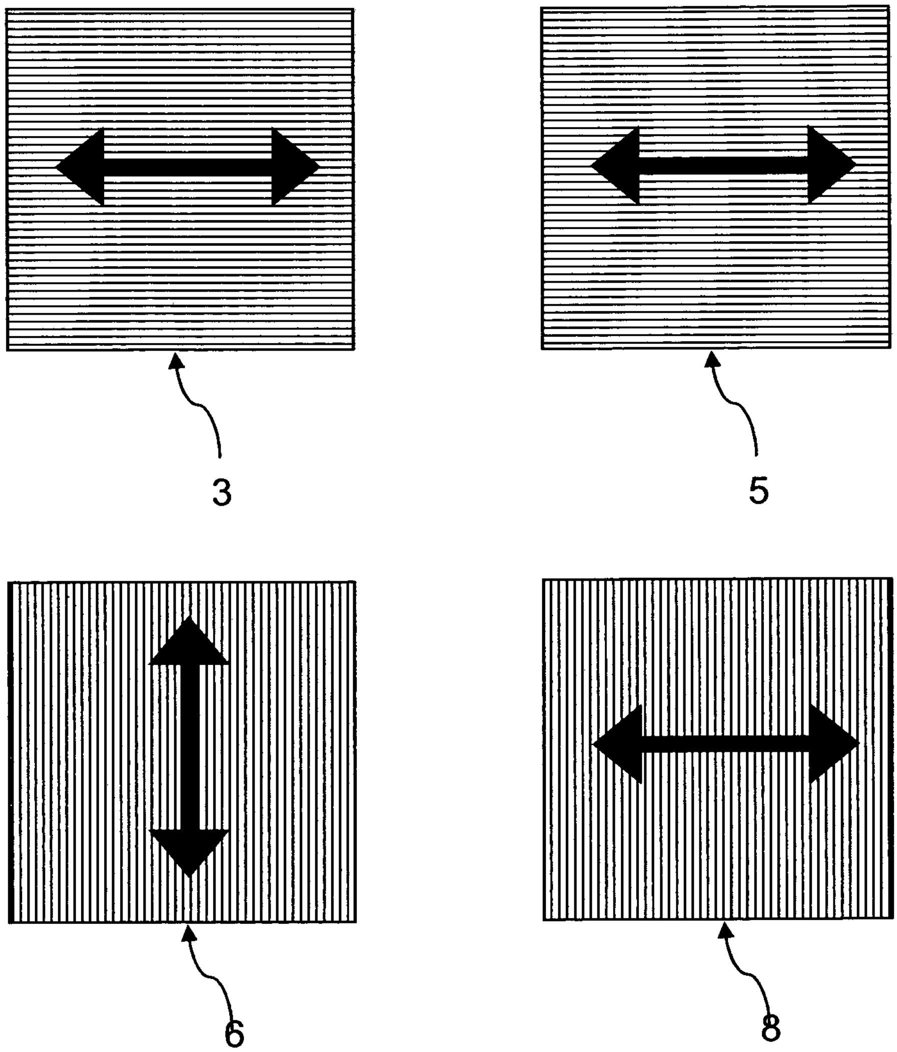

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009141295 A
- US 20100259698 A
- WO 2012047843 A
- US 4943104 A
- WO 2010118422 A
- EP 34832 A
- EP 44893 A
- EP 48583 A
- EP 54217 A
- EP 56492 A
- EP 59036 A
- GB 2065158 A
- GB 2065695 A
- GB 2081736 A
- GB 2082196 A
- GB 2094822 A
- GB 2094825 A
- JP OS55123673 A
- DE 3017877
- DE 3040102
- DE 3115147
- DE 3115762
- DE 3150803
- DE 3201120
- DE 3126108
- DE 3202761
- EP 43904 A
- DE 3123519
- WO 822054 A
- GB 2079770 A
- JP 56057850 A
- JP OS56104984 B
- US 4308161 A
- US 4308162 A
- US 4340973 A
- EP 60895 A
- EP 68427 A
- WO 821191 A
- EP 2166040 A
- US 20110042651 A
- EP 47027 A
- DE 3110960
- EP 698649 A
- EP 12008320 A
- EP 13002711 A
- EP 13005918 A
- US 7038745 B
- US 6099758 A
- US 20110043732 A
- US 7023602 B
- WO 2012052100 A


### In der Beschreibung aufgeführte Nicht-Patentliteratur


- **MANFRED RICHTER.** Einführung in die Farbmetrik. Verlag Walter de Gruyter & Co, 1981
- **B. BAHADUR.** Liquid Crystals - Applications and Uses. World Scientific Publishing, 1992, vol. 3
- **T. UCHIDA ; C. SHISHIDO ; H. SEKI ; M. WADA.** *Mol. Cryst. Liq. Cryst.,* 1977, vol. 39, 39-52
- **H. SEKI ; C. SHISHIDO ; S. YASUI ; T. UCHIDA.** *Jpn. J. Appl. Phys.,* 1982, vol. 21, 191-192
- **A. LOUDET et al.** *Chem. Rev.,* 2007, 4891-4932
- **K. LAW et al.** *Chem. Rev.,* 1993, 449-486
- *Technical Digest SID,* 2006, vol. 45.1
- Merck Liquid Crystals, Physical Properties of Liquid Crystals. *Status Nov.,* 1997
- **D. S. KLIGER et al.** Polarized Light in Optics and Spectroscopy. Academic Press, 1990